(19) Europäisches Patentamt
European Patent Office
Office européen des brevets

(11) **EP 2 840 412 B1**

(12) **EUROPÄISCHE PATENTSCHRIFT**

(45) Veröffentlichungstag und Bekanntmachung des Hinweises auf die Patenterteilung:
**03.04.2019   Patentblatt 2019/14**

(51) Int Cl.:
*G01S 7/02* (2006.01)          *G01S 13/88* (2006.01)

(21) Anmeldenummer: **13196029.6**

(22) Anmeldetag: **06.12.2013**

(54) **System und Verfahren zur Ausleuchtung und Abbildung eines Objekts**

System and method for illumination and imaging of an object

Système et procédé d'éclairage et de représentation d'un objet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2013   DE 102013214141**
**17.09.2013   DE 102013218555**

(43) Veröffentlichungstag der Anmeldung:
**25.02.2015   Patentblatt 2015/09**

(73) Patentinhaber: **Rohde & Schwarz GmbH & Co. KG**
**81671 München (DE)**

(72) Erfinder: **Gumbmann, Frank**
**90403 Nürnberg (DE)**

(74) Vertreter: **Körfer, Thomas et al**
**Mitscherlich PartmbB**
**Patent- und Rechtsanwälte**
**Sonnenstrasse 33**
**80331 München (DE)**

(56) Entgegenhaltungen:
EP-A1- 1 506 447          DE-A1-102011 078 539
DE-T2- 60 318 075          US-A- 2 736 895
US-A- 3 235 870          US-A- 5 227 800
US-A- 5 680 139          US-A1- 2010 117 885

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft ein System zur Ausleuchtung und Abbildung von Objekten mithilfe elektromagnetischer Strahlung, bspw. Millimeterstrahlung, sowie ein Betriebsverfahren für ein derartiges System.

Mikrowellen, insbesondere Millimeterwellen, werden zunehmend u.a. für Personenscanner eingesetzt. Millimeterwellen eignen sich zur Detektion metallischer wie auch nichtmetallischer Objekte, bspw. keramischer Objekte wie Messer Gleichzeitig sind Luft und andere Materialien, wie sie etwa für Kleidung verwendet werden, transparent für derartige Strahlung. Somit können Millimeterwellen für berührungslose Scanner zur Detektion unter der Kleidung verborgener Gegenstände eingesetzt werden. Derartige Scanner sind Metalldetektoren überlegen und können diese ergänzen oder ersetzen, bspw. im Bereich von Sicherheitskontrollen an Flughäfen oder sicherheitsrelevanten öffentlichen Einrichtungen.

Beim Betrieb eines derartigen Scanners wird ein Mikrowellensignal mit einer gegebenen Bandbreite erzeugt und von mindestens einer Antenne in Richtung eines menschlichen Körpers mit ggf. unter der Kleidung verborgenen Objekten ausgesendet. Die Mikrowellensignale werden vom Körper und von den versteckten Objekten reflektiert. Die Reflektionen werden von mindestens einer Antenne empfangen. Sende- und Empfangsantenne können separat vorgesehen sein.

Ein Scanner kann auch eine Vielzahl von Sende- und/oder Empfangsantennen umfassen. Ein derartiger Scanner kann bspw. in einem multistatischen Modus betrieben werden, bei dem eine Sendeantenne ein Signal aussendet, und Reflektionen dieses Signals nach Amplitude und Phasenlage von mehreren oder allen Empfangsantennen empfangen werden. In einem anderen multistatischen Modus können auch mehrere Sendeantennen gleichzeitig senden, wobei das reflektierte Signal jeder einzelnen Sendeantenne von jeweils einer Mehrzahl von Empfangsantennen empfangen wird.

Es können Verfahren der Apertursynthese zur Anwendung kommen, bspw. Verfahren der digitalen Keulenformung ("Digital Beamforming", DBF), bei denen eine Fokussierung der ausgesendeten und/oder der empfangenen Strahlung zur Objektabtastung ohne mechanische Bewegung der Antennen und ohne elektromagnetische Bündelung durch Linsen oder dgl. erfolgen kann; stattdessen erfolgt eine Fokussierung nur durch gezielte Ansteuerung der Sendeantennen und/oder Auswertung der von den Empfangsantennen detektierten Signale. Bei letzteren wird bspw. durch einen softwarebasierten Algorithmus ein von einem gegebenen Raumpunkt in Richtung auf mehrere Antennen reflektiertes und dort empfangenes Signal ausgewertet.

DE 10 2011 078 539 A1 beschreibt eine Vorrichtung zur Ausleuchtung eines Prüfobjekts, wobei die Vorrichtung mindestens ein Reflektorelement zur Reflektion von Mikrowellensignalen umfasst. Zusätzlich zu den direkt auf das Objekt abgestrahlten und von diesem reflektierten Strahlen werden weitere über das Reflektorelement verlaufende Mikrowellensignale empfangen und zur Rekonstruktion der Abbildung des Prüfobjekts verwendet. Für die synthetische Fokussierung wird dabei von der Vorstellung einer oder mehrerer virtueller Sende- bzw. Empfangsantennen ausgegangen, deren Positionen den an einer Spiegelachse gespiegelten realen Positionen realer Sende- bzw. Empfangsantennen entsprechen.

Das Reflektorelement ermöglicht eine verbesserte Ausleuchtung von Objektbereichen, die durch direkt abgestrahlte Signale zu wenig oder gar nicht ausgeleuchtet werden. Allerdings kann es durch die vom Reflektorelement verursachten Spiegelungen des Objekts zu Störungen in der Rekonstruktion, d.h. der Abbildung des Objekts kommen.

Die US 2010/117885 A1 offenbart einen elektromagnetischen Bild-Scanner, der eine linear polarisierte Millimeter-Wellenstrahlung über eine Sendeantenne ausstrahlt, die in einer so genannten 1/4-Wellenlängen-Platte (quarter wave plate (QWP)) in eine zirkular polarisierte Millimeter-Wellenstrahlung umgewandelt wird, bevor sie auf ein Objekt auftrifft. Nach der Reflexion der zirkular polarisierten Millimeter-Wellenstrahlung am Objekt wird diese wiederum in der 1/4 Wellenlängen-Platte in eine linear polarisierte Millimeter-Wellenstrahlung gewandelt und von der Empfangsantenne als solche empfangen.

Auch die EP 1 506 447 A0 (WO 0 398 323 A1) offenbart eine 1/4 Wellenlänge-Platte welche die horizontale Komponente einer einfallenden linear polarisierten Strahlung einer Strahlungsquelle als zirkular polarisierte Strahlung reflektiert. Nach der Reflexion der zirkular polarisierten Strahlung am Zielobjekt wird die zirkular polarisierte Strahlung in der 1/4 Wellenlängen-Platte in eine horizontal und damit linear polarisierte Strahlung gewandelt. Die 1/4 Wellenlängen-Platte dient zwar als Reflektorelement zur Reflexion von der Strahlungsquelle ausgestrahlten Strahlung in Richtung auf das Zielobjekt, ist aber für die vom Zielobjekt reflektierte Strahlung transmittierend und nicht reflektierend. Der Bildwandler, der für horizontal polarisierte Strahlung sensitiv ist, empfängt die horizontal und damit linear polarisierte Strahlung.

Die US 5 680 139 A offenbart ein Mikrowellen- und Millimeterwellen-Radar. Hierzu wird die Mikrowellen- und Millimeterwellen-Strahlung von einer Strahlungsquelle erzeugt und über so genannte Transreflektoren, die nur Strahlung einer bestimmten Polarisation passieren lassen und insbesondere eine zur einfallenden Strahlung orthogonal ausgerichtete Strahlung reflektieren, und so genannte Twistreflektoren, die eine zur einfallenden Strahlung orthogonal ausgerichtete Strahlung reflektieren, zu einer Empfangsantenne einer Hochfrequenz-Baugruppe weitergeleitet. Die Transreflektoren und die Twistreflektoren, die beide jeweils als Reflektorelemente agieren, führen keine Wandelung einer linear polarisierten Strahlung in eine elliptisch oder zirkular polarisierte Strahlung durch.

Die DE 603 18 075 T2 (EP 1 543 585 B1)offenbart ein Echtzeitmillimeterwellen-Abbildungssystem mit zwei Segmentantennen und einem in einem Winkel von 45° über der Segmentantenne angeordneten reflektierenden Schirm. Der reflektierende Schirm führt eine Drehung der Polarisation der einfallenden Strahlung um 90° durch.

Die US 2,736,895 A offenbart eine Autoradioantenne bestehend aus einem als Hauptreflektor agierenden Parabolspiegel und einem Hilfsspiegel. Der Hauptreflektor führt hierbei eine Drehung der Polarisationsrichtung der einfallenden Strahlung um 90° durch.

Eine Aufgabe der vorliegenden Erfindung besteht darin, ein System und ein Verfahren zur Abbildung eines Objekts vorzuschlagen, bei dem durch ein Reflektionselement verursachte Störungen in der Rekonstruktion minimiert werden können, und damit sowohl eine verbesserte Ausleuchtung als auch eine verbesserte Abbildungsqualität erzielt werden können.

Die Aufgabe wird für das System durch die Merkmale des Anspruchs 1 und für das Verfahren durch die Merkmale des Anspruchs 12 gelöst.

Erfindungsgemäß wird ein System zur Abbildung eines Objekts vorgeschlagen, welches mindestens eine Sendeantenne zur Aussendung elektromagnetischer Strahlung eines ersten Polarisationszustandes zur Ausleuchtung des Objekts umfasst. Mindestens eine Empfangsantenne ist zum Empfang vom Objekt reflektierter Strahlung eines zweiten Polarisationszustandes vorgesehen. Mindestens ein Reflektorelement dient zur Reflektion von der Sendeantenne ausgesendeter Strahlung in Richtung auf das Objekt und/oder zur Reflektion vom Objekt reflektierter Strahlung in Richtung auf die Empfangsantenne. Eine polarisationswirksame Materialschicht ist auf dem Reflektorelement vorgesehen, um einen vom Reflektorelement reflektierten Strahlungsanteil in einen Polarisationszustand derart zu überführen, dass der Strahlungsanteil an der Empfangsantenne im zweiten Polarisationszustand ist. Eine Verarbeitungseinheit dient zur Bestimmung der Abbildung des Objekts basierend auf der von der Empfangsantenne empfangenen Strahlung.

Das System kann zur Ausleuchtung und Abbildung eines Objekts wie etwa eines Menschen oder auch eines Tieres oder unbelebten Objekts ausgelegt sein. Bestimmte Ausführungsformen des Systems haben den Verwendungszweck, am Körper eines Menschen unter dessen Kleidung verborgene Objekte zu detektieren, was nicht-metallische Objekte wie etwa keramische Waffen oder körpernah geformte Objekte aus plastischen Sprengstoffen einschließen kann.

Bei den Sende- und/oder Empfangsantennen kann es sich bspw. um Hornantennen handeln. Die elektromagnetische Strahlung kann etwa Mikrowellen umfassen, also bspw. Strahlung im Wellenlängenbereich von 1 Millimeter bis 10 Millimeter.

Der erste Polarisationszustand der ausgesendeten Strahlung und der zweite Polarisationszustand der empfangenen Strahlung können übereinstimmen oder können unterschiedlich sein, d.h. die Sende- und die Empfangsantenne können zur Aussendung bzw. zum Empfang von Strahlung ein- und desselben Polarisationszustandes ausgebildet sein, oder die Empfangsantenne ist zum Empfang von Strahlung eines Polarisationszustandes ausgebildet, der sich vom Polarisationszustand der ausgesendeten Strahlung unterscheidet. Ein Polarisationszustand kann auch die Aussendung bzw. den Empfang unpolarisierter Strahlung betreffen.

Bei bestimmten Ausführungsformen betrifft sowohl der erste Polarisationszustand als auch der zweite Polarisationszustand jeweils eine lineare Polarisation, d.h. die Sendeantenne ist zur Aussendung linear polarisierter Strahlung ausgebildet, und die Empfangsantenne ist zum Empfang linear polarisierter Strahlung ausgebildet. Bspw. kann die Sendeantenne zur Aussendung linear polarisierter Strahlung einer ersten Schwingungsrichtung ausgebildet sein, und die Empfangsantenne kann zum Empfang linear polarisierter Strahlung einer zweiten Schwingungsrichtung ausgebildet sein. Die erste und die zweite Schwingungsrichtung können gleich sein, oder können unterschiedlich sein, und können bspw. um 80° bis 100°, bevorzugt 90°, gegeneinander gekippt sein.

Das Reflektorelement kann eine ebene oder auch gekrümmte reflektierende Oberfläche haben. Das Reflektorelement kann etwa aus einem spiegelnden metallischen Material bestehen.

Die polarisationswirksame Materialschicht kann eine Beschichtung, Auflage, Platte, Scheibe, Folie, einen Überzug, eine Plattierung oder Abscheidung auf dem Reflektorelement umfassen. Die Materialschicht kann wirksam sein, um eine lineare Polarisierung einfallender Strahlung in eine elliptische Polarisierung der reflektierten Strahlung zu transformieren. Hier und im Folgenden soll eine elliptische Polarisierung auch den Sonderfall einer zirkularen Polarisierung mit umfassen.

Die polarisationswirksame Materialschicht kann auch ausgebildet sein, um eine lineare Polarisation in eine andere lineare Polarisation zu transformieren, oder um eine Reflektion am Reflektorelement so zu bewirken, dass eine lineare Polarisation beibehalten wird, d.h. eine Schwingungsrichtung der ein- und ausfallenden Strahlung unverändert bleibt.

Das Material der Schicht kann ein Dielektrikum umfassen. Die Beschichtung kann bevorzugt Polyethylenterephthalat (PET), Polyvinylchlorid (PVC), Polycarbonat (PC), Glas, Acrylglas, und/oder Kautschuk umfassen; diese Auflistung ist jedoch nicht abschließend und es können alternativ oder zusätzlich andere dielektrisch wirksame und/oder isolierende Materialien verwendet werden.

Ausführungsformen polarisationswirksamer Auflagen oder Beschichtungen können etwa Strichgitter oder vergleichbar wirkende Anordnungen wie etwa Schichtungen oder Beschichtungen mit elektromagnetisch wirksamen Partikeln wie etwa Nanopartikeln umfassen. Beispielsweise kann von zwei vorgesehenen Reflektorelementen eines mit einer Beschichtung versehen sein, die eine Polarisation in eine Strahlung einbringt, und das andere Reflektorelement kann auf eine vorhandene Polarisation einwirken, indem sie bspw. eine lineare in eine elliptische Polarisation transformiert.

Eine Dicke der Materialschicht kann kleiner als ein Viertel einer Wellenlänge der elektromagnetischen Strahlung gewählt werden. Die Dicke kann auch größer als ein Viertel der Wellenlänge gewählt werden, sie sollte jedoch außerhalb eines Bereiches um ein Viertel der Wellenlänge herum liegen, bei der eine einfallende Strahlung unerwünscht stark absorbiert wird. Bei verschiedenen Ausführungsformen kann die Dicke also in geeigneter Weise unter einem Viertel der Wellenlänge liegen, oder über einem Viertel der Wellenlänge, aber unter der halben Wellenlänge liegen, usw..

Störungen in der Rekonstruktion des Objekts können u. U. auch durch eine geeignete Einstellung der Empfangspegel der Spiegelungen an der Empfangsantenne minimiert werden. Material und/oder Dicke des Beschichtungsmaterials kann daher auch nach allgemeinem Reflexions- bzw. Absorptionsvermögen im betreffenden Wellenlängenbereich ausgewählt werden.

Eine relative Permittivitätszahl des Materials der Schicht kann zwischen 2 und 4 liegen, bevorzugt zwischen 2,5 und 3,5. Bei alternativen Ausführungsformen wird eine relative Permittivitätszahl des Schichtmaterials größer als 5, bevorzugt größer oder gleich 6 gewählt.

Bei Ausführungsformen des erfindungsgemäßen Systems ist die Materialschicht derart ausgebildet, dass ein vom Reflektorelement einfach reflektierter Strahlungsanteil bevorzugt an der Empfangsantenne detektiert wird. Zusätzlich oder alternativ kann der Empfang anderer Strahlungsanteile an der Empfangsantenne unterdrückt sein, etwa von Mehrwegeanteilen der Strahlung, die zweifach am Reflektorelement reflektiert werden.

Bei einigen der vorgenannten Ausführungsformen ist die Materialschicht derart polarisationswirksam ausgebildet, dass an der Empfangsantenne eine Überlagerung aus dem einfach reflektierten Strahlungsanteil und einem vom Reflektorelement zweifach reflektierten Strahlungsanteil detektiert wird. Beide Anteile können bspw. derart polarisiert sein, dass sie etwa gleich stark an die Empfangsantenne ankoppeln.

Bei manchen Ausführungsformen des erfindungsgemäßen Systems ist das Reflektorelement mit der Materialschicht in Bezug auf eine Ebene, in der die Sende- und/oder Empfangsantennen angeordnet sind, um 45° bis 135°, bevorzugt 80° bis 100°, verkippt. Sind die Antennen in einer senkrechten Ebene über einem Boden angeordnet, kann das Reflektorelement sich parallel zum Boden erstrecken, und kann etwa auf dem Boden liegen oder eine Bodenplatte des Systems bilden, oder kann in Überkopfhöhe parallel zum Boden angeordnet sein.

Das System kann eine Mehrzahl von Sende- und/oder Empfangsantennen in einer monostatischen, bistatischen oder multistatischen Konstellation umfassen. Die Verarbeitungseinheit kann ausgebildet sein, um eine senderseitige und/oder empfangsseitige synthetische Fokussierung vorzunehmen.

Erfindungsgemäß wird weiterhin ein Verfahren zur Abbildung eines Objekts vorgeschlagen, welches die folgenden Schritte umfasst: Aussenden elektromagnetischer Strahlung eines ersten Polarisationszustandes zur Ausleuchtung des Objekts; Reflektion, von mindestens einem Reflektorelement, von der Sendeantenne ausgesendeter Strahlung in Richtung auf das Objekt und/oder vom Objekt reflektierter Strahlung in Richtung auf die Empfangsantenne, wobei durch eine polarisationswirksame Materialschicht auf dem Reflektorelement ein vom Reflektorelement reflektierter Strahlungsanteil in einen Polarisationszustand derart überführt wird, dass der Strahlungsanteil an der Empfangsantenne im zweiten Polarisationszustand ist; Empfangen vom Objekt reflektierter Strahlung eines zweiten Polarisationszustandes; und Bestimmen der Abbildung des Objekts basierend auf der von der Empfangsantenne empfangenen Strahlung.

Aus Sicht der Erfindung stellt ein bekanntes Abbildungssystem mit unbeschichtetem Reflektorelement nur einen Sonderfall dar, bei dem bestimmte Spiegelbilder bevorzugt detektierbar sind, andere hingegen unterdrückt werden. Mit der erfindungsgemäß vorgesehenen polaritätswirksamen Beschichtung kann jedoch Einfluss darauf genommen werden, welche der von dem Reflektorelement erzeugten Spiegelbilder in welcher Stärke von den Empfangsantennen detektiert werden; dies umfasst auch gewünschte Überlagerungen von Spiegelbildern. Dadurch erhält der Fachmann zusätzliche Konfigurationsmöglichkeiten an die Hand, um sowohl Ausleuchtung als auch Abbildungsqualität eines konkreten Systems zu optimieren.

So kann die Ausleuchtung in Randbereichen eines Detektors verbessert werden, etwa im Fuß- bzw. Fußbodenbereich von Personenscannern, wobei Störungen in der Rekonstruktion minimiert werden können. Der Einsatzbereich von Reflektorelementen zur verbesserten Ausleuchtung von Objekten wird erweitert; so können etwa bei existierenden Konfigurationen weitere Reflektorelemente hinzugefügt werden, um eine Ausleuchtung weiter zu verbessern.

Eine erfindungsgemäße Beschichtung kann auf einfache Weise durch Auflegen oder Kleben von Schichten, Folien, Matten oder Platten aus handelsüblichen Materialien wie PVC oder Glas auf ein z.B. metallisches Reflektorelement kostengünstig realisiert werden. Sollte eine Ansteuerung der Sendeantennen und/oder Auswertung der empfangenen Signale anzupassen sein, erfordert dies meist lediglich Änderungen an einer Software, so dass neben dem Vorsehen beschichteter Reflektorplatten, bspw. einer beschichteten Fußbodenplatte, keine weiteren Änderungen an einer Hardwarekonstellation erforderlich sind. Eine Aufrüstung existierender Systeme ist somit einfach möglich, indem ein existierender Reflektor mit einer Beschichtung versehen oder durch einen beschichteten Reflektor ersetzt wird, und ggf. eine Softwareaktualisierung vorgenommen wird.

Weitere Aspekte und Vorteile der Erfindung werden nachfolgend anhand der beigefügten Zeichnungen beschrieben. Hierbei zeigen:

Fig. 1A    in schematischer Form ein Ausführungsbeispiel eines erfindungsgemäßen Abbildungssystems;

Fig. 1B    eine Detailansicht einer Antennenanordnung des Abbildungssystems aus Fig. 1A;

Fig. 2    eine Schnittansicht eines Ausführungsbeispiels eines erfindungsgemäß beschichteten Reflektorelements;

Fig. 3A-D    schematische Darstellungen verschiedener Laufwege von ausgesendeten und reflektierten Strahlen im System der Fig. 1A;

Fig. 4A-G    schematische Darstellungen zur Transformation von Polarisationszuständen entlang des Laufweges der Fig. 3B bei einem unbeschichteten Reflektorelement;

Fig. 5A-G    schematische Darstellungen zur Transformation von Polarisationszuständen entlang des Laufweges der Fig. 3B bei einem beschichteten Reflektorelement;

Fig. 6A-G    schematische Darstellungen zur Transformation von Polarisationszuständen entlang des Laufweges der Fig. 3C bei einem unbeschichteten Reflektor-element;

Fig. 7A-G    schematische Darstellungen zur Transformation von Polarisationszuständen entlang des Laufweges der Fig. 3C bei einem beschichteten Reflektor-element;

Fig. 8A-H    schematische Darstellungen zur Transformation von Polarisationszuständen entlang des Laufweges der Fig. 3D bei einem unbeschichteten Reflektor-element;

Fig. 9A-H    schematische Darstellungen zur Transformation von Polarisationszuständen entlang des Laufweges der Fig. 3D bei einem beschichteten Reflektor-element;

Fig. 10    ein Diagramm zur Reflektion einer elektromagnetischen Welle an einem erfindungsgemäß beschichteten Reflektorelement;

Fig. 11    eine Veranschaulichung einer elliptischen Polarisation nach Reflektion an einem erfindungsgemäß beschichteten Reflektorelement;

Fig. 12A    ein Diagramm zur Ankopplung einer reflektierten elektromagnetischen Welle in Abhängigkeit von einem Phasenversatz nach Reflektion an einem erfindungsgemäß beschichteten Reflektorelement;

Fig. 12B    ein Diagramm zur Darstellung eines maximalen Phasenversatzes in Abhängigkeit von einer Permittivität eines Beschichtungsmaterials; und

Fig. 13    ein Diagramm zur Veranschaulichung einer Betriebsweise des Systems aus Fig. 1.

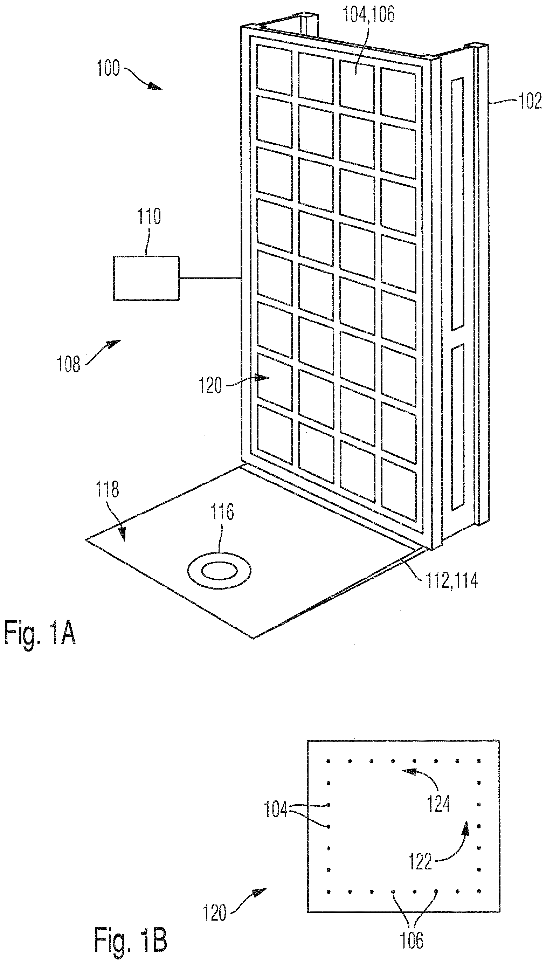

In Fig. 1 ist ein Ausführungsbeispiel eines erfindungsgemäßen Abbildungssystems 100 schematisch dargestellt. Das System 100 umfasst einen senkrechten Rahmen 102, in dem eine Vielzahl Sendeantennen 104 sowie Empfangsantennen 106 angeordnet sind. Die Empfangsantennen 104 sind ausgebildet, um linear polarisierte Mikrowellen in einen Bereich 108 vor dem Rahmen 102 einzustrahlen, um ein dort befindliches Objekt auszuleuchten, bspw. eine Person. Die Empfangsantennen 106 dienen zum Empfang vom Objekt reflektierter Strahlung und sind zum Empfang linear polarisierter Strahlung ausgebildet.

Eine Verarbeitungseinheit 110 dient der Ansteuerung der Antennen 104, 106 und der Bestimmung einer Abbildung des Objekts basierend auf Signalen, welche die von den Empfangsantennen 106 empfangene Strahlung repräsentieren. Die Verarbeitungseinheit 110 kann zur sender- und/oder empfangsseitigen synthetischen Fokussierung ausgebildet sein. Die Antennen 104, 106 können bspw. in einer multistatischen Konfiguration betrieben werden.

Auf dem Boden vor dem Rahmen 102 befindet sich eine Bodenplatte 112 mit einem Reflektorelement 114. Platte 112 und Element 114 sind einem Winkel von 90° zum Rahmen 102 mit den Antennen 104, 106 angeordnet und begrenzen den Ausleuchtungsbereich 108, in diesem Beispiel nach unten. Von den Sendeantennen 104 ausgesendete Mikrowellen werden durch das Reflektorelement 114 in Richtung auf das Objekt reflektiert. Außerdem wird vom Objekt reflektierte Strahlung in Richtung auf die Empfangsantennen 106 reflektiert.

Das Element 114 kann etwa eine metallische reflektierende Platte umfassen, auf die sich eine auszuleuchtende Person in einem durch das Symbol 116 bezeichneten Bereich stellt.

Auf das Reflektorelement 114, d.h. auf dessen dem Ausleuchtungsbereich 108 zugewandter Seite, ist eine polarisationswirksame Beschichtung 118 aufgebracht. Diese dient dazu, einen vom Reflektorelement 114 reflektierten Strahlungsanteil in einen Polarisationszustand derart zu überführen, dass dieser Strahlungsanteil an den Empfangsantennen 106 detektiert wird, weil sein Polarisationszustand mit der linearen Polarisation der Antennen 106 übereinstimmt. Im vorliegenden Beispiel transformiert die Beschichtung 118 auftreffende, linear polarisierte Strahlung in elliptisch polarisierte Strahlung.

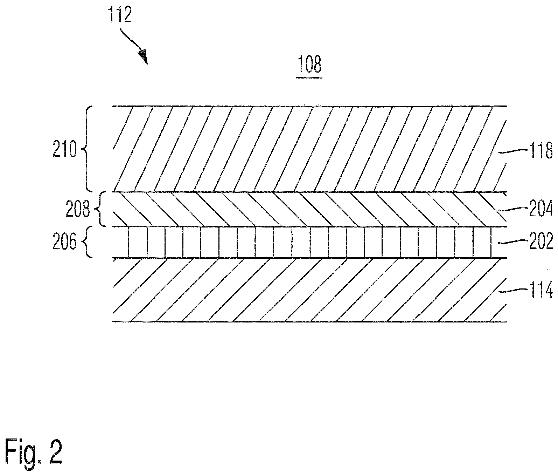

Fig. 2 ist eine schematisierte Schnittansicht der Bodenplatte 112 mit Reflektorelement 114 und Beschichtung 118. Das Element 114 kann bspw. als reflektierende Metallplatte ausgeführt sein, wobei das Metall etwa Aluminium sein kann. Die metallische Schicht 112 kann ausreichend dick sein, um bspw. für eine Verwendung als eine oder in einer Bodenplatte 112 geeignet zu sein. Zusätzlich oder alternativ kann das Reflektorelement 112 durch weitere Schichten oder Platten (nicht gezeigt) mechanisch stabilisiert sein, die dem Reflektorelement 112 an der dem Ausleuchtungsbereich 108 abgewandten Seite angelagert sind.

In Richtung auf den Ausleuchtungsbereich 108 kann auf das Reflektorelement 112 eine Lackschicht 202 aufgebracht sein. Die Schicht 202 kann dem Schutz des Reflektorelements 112 vor mechanischer und/oder chemischer Beanspruchung dienen und kann bspw. einen Klarlack umfassen. Bei anderen Ausführungsbeispielen kann eine Schutz- bzw. Lackschicht auch weggelassen werden.

Auf der Lackschicht 202 ist eine Klebeschicht 204 aufgebracht, die der mechanischen Befestigung der darüberliegenden Beschichtung 118 am Reflektorelement 114 bzw. der Bodenplatte 112 dient. Das Material der Klebeschicht 204 sollte in Abhängigkeit von den Materialien der angrenzenden Schichten 118 und 202 bzw. 112 sowie gemäß dem gewünschten Herstellungsprozess gewählt werden; für ein Heißklebeverfahren zum Aufkleben der Beschichtung 114 auf das Reflektorelement 112 kann bspw. ein Schmelzklebstoff verwendet werden.

Eine Befestigung der Beschichtung 114 auf dem Reflektorelement kann statt durch Kleben auch anders erfolgen, bspw. kann eine mechanische Befestigung mittels Klammern, Schrauben oder Nieten erfolgen. Ist das Reflektorelement Teil einer Bodenplatte, kann eine polarisationswirksame Schicht, Platte oder Auflage im einfachsten Fall ohne weitere Befestigung auch nur auf das Reflektorelement aufgelegt werden; bspw. können Reflektorelement und Auflage durch einen gemeinsamen Rahmen gehalten werden.

Somit kann die Klebeschicht 204 wie auch die Lackschicht 202 bei anderen Ausführungsbeispielen auch weggelassen werden. Sind jedoch eine oder mehrere Schichten vorhanden, wie eine Lackschicht vergleichbar zur Schicht 202, eine Klebeschicht vergleichbar zur Schicht 204, und/oder weitere oder andere Schichten, tragen diese u.U. zur Polarisationswirksamkeit der Beschichtung 118 bei. In diesem Sinne sind Schichten wie die Schichten 202 und 204 zur Beschichtung 118 zuzurechnen. Nachfolgend wird dieser Aspekt aus Gründen der Klarheit nicht jedesmal explizit erwähnt.

Die polarisationswirksame Beschichtung 118 kann ein dielektrisches Material umfassen. Die Beschichtung 118 kann etwa aus einem Material wie bspw. Glas oder einem glasartigen Material bestehen, einschließlich Polycarbonat (PC), Polymethylmethacrylat (PMMA) bzw. Acryl- oder Plexiglas, Polyethylenterephthalat (PET), oder anderen Kunststoffgläsern. Zusätzlich oder alternativ kann das Material der Beschichtung 118 auch andere polarisationswirksame Materialien umfassen, wie bspw. Polyethylenterephthalat (EPT), Polyvinylchlorid (PVC) oder Kautschuk, bspw. Polyacryl-Kautschuk und/oder C1-Kautschuk. Verwendbar sind auch Materialien mit einstellbarer bzw. ansteuerbarer Permittivität, die bspw. Flüssigkristalle enthalten.

Eine Dicke 206 der Lackschicht 202 kann zwischen 10 Mikrometern und 70 Mikrometern liegen, bevorzugt zwischen 10 Mikrometern und 60 Mikrometern, besonders bevorzugt zwischen 10 Mikrometern und 50 Mikrometern. Eine Dicke 208 der Klebeschicht 204 kann zwischen 10 Mikrometern und 70 Mikrometern betragen, bevorzugt zwischen 10 Mikrometern und 60 Mikrometern, besonders bevorzugt zwischen 10 Mikrometern und 50 Mikrometern.

Soll die Polarisationswirksamkeit im wesentlichen durch die Beschichtung 118 bestimmt sein, sollten die Dicken 206 und 208 jeweils möglichst dünn gewählt werden. Ist alternativ eine Polarisationswirksamkeit der Schichten 202 und/oder 204 gut bekannt und kann zu einer gewünschten Polarisationswirksamkeit beitragen, kann diese für die effektive bzw. gesamte Polarisationswirksamkeit in Betracht gezogen werden. So sind Ausführungsbeispiele denkbar, bei denen auf ein Reflektorelement lediglich eine Schicht aufgetragen ist, die bspw. sowohl als Schutz dient (Schutzlack) als auch in der gewünschten Weise polarisationswirksam ist.

Eine Dicke 210 der Beschichtung 118 ist abhängig von der gewünschten Polarisationswirksamkeit zu wählen. Die (effektive bzw. strahlungswirksame) Dicke 210 kann bspw. so ausgelegt werden, dass sie kleiner ist als ein Viertel einer Wellenlänge der verwendeten Strahlung unter Beachtung einer Permittivitätszahl eines Dielektrikums, wenn ein solches für die Beschichtung 118 verwendet wird. Bei Frequenzen der verwendeten Strahlung im Bereich von 30 Gigahertz bis 100 Gigahertz, bevorzugt im Bereich von 70 Gigahertz bis 80 Gigahertz, ergeben sich Wellenlängen von etwa 10 Millimetern bis 3 Millimetern, bevorzugt etwa 3,7 Millimetern bis 4,3 Millimetern.

Wird als Beschichtungsmaterial etwa Acrylglas mit einer relativen Permittivitätszahl von 2,8 gewählt, kann eine Dicke 210 zwischen 250 Mikrometern und 600 Mikrometern, bevorzugt 300 Mikrometern und 400 Mikrometern, gewählt werden. Bei einem konkreten Ausführungsbeispiel kann die Dicke 210 des verwendeten Acrylglases zu 350 Mikrometern gewählt werden. Hierbei kann berücksichtigt werden, dass sich bei einer Lackschicht 202 mit einer Dicke 206 von 50 Mikrometern und einer Klebeschicht 204 mit einer Dicke 208 von 50 Mikrometern eine effektive relative Permittivität von etwa 3,1 einstellen kann; der detaillierte Wert ist abhängig von den optischen Eigenschaften der Lack- und Klebeschicht.

Wird als Material der Schicht 118 PVC gewählt, so kann eine Dicke 210 dieser Schicht 118 zwischen 200 Mikrometern und 500 Mikrometern, bevorzugt 200 Mikrometern und 300 Mikrometern, gewählt werden. Bei einem konkreten Ausführungsbeispiel kann die Dicke 210 der verwendeten PVC-Schicht 118 zu 220 Mikrometern gewählt werden.

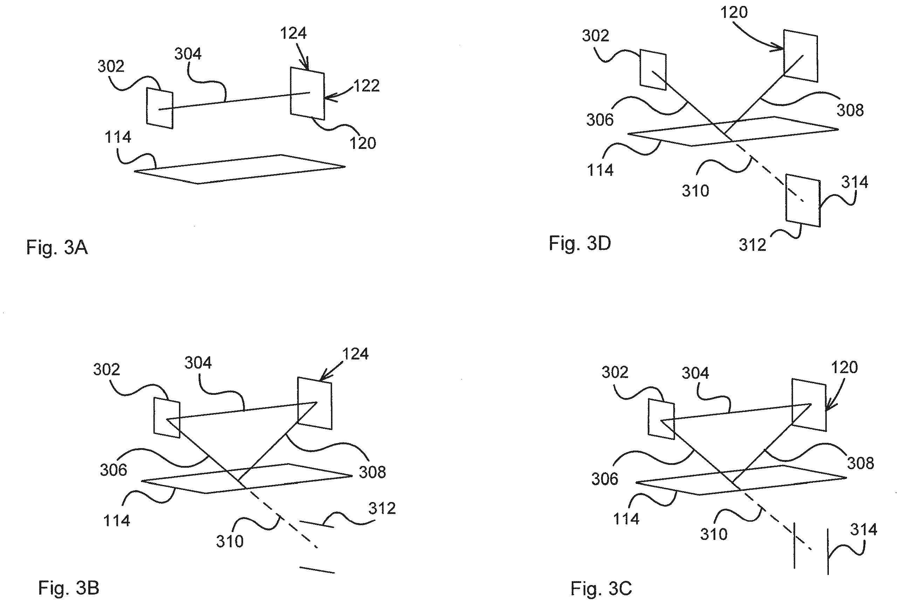

Die Figuren 3A - 3D zeigen schematisch mögliche unterschiedliche Laufwege von Strahlen, die von einem Antennenelement 120 des Systems 100 aus Fig. 1 in Richtung auf ein Objekt 302 ausgesendet werden. Durch die Verwendung des Reflektorelements 114 werden Mehrwegesignale erzeugt, d.h. es entstehen unterschiedliche Spiegelbilder am Ort des Antennenelements 120.

In Fig. 1B wird der Aufbau des Antennenelements 120 skizziert. Das Element 120 umfasst eine Mehrzahl von Sendeantennen 104 und eine Mehrzahl von Empfangsantennen 106. Die Sendeantennen 104 können in einem senkrechten Muster 122 übereinander und die Empfangsantennen 106 in einem separaten horizontalen Muster 124 angeordnet sein. Auf eine derartige Anordnung wird aus Gründen der Erläuterung nachfolgend Bezug genommen. Alternativ können Sende- und Empfangsantennen aber auch in anderen, auch überlappenden Mustern, angeordnet sein, bspw. alternierend in einem gemeinsamen Muster.

Fig. 3A veranschaulicht einen direkten Laufweg 304 von Strahlung, die vom Antennenelement 120, genauer der Struktur 122 ausgesendet wird. Die Strahlung trifft auf das Objekt 302 und gelangt unmittelbar, d.h. ohne Reflektion am Reflektorelement 114, zurück zum Antennenelement 120 und kann dort von den Empfangsantennen der Struktur 124 detektiert werden.

Fig. 3B veranschaulicht eine einfache Spiegelung des Objekts 302 durch das Reflektorelement 114, nämlich eine Spiegelung des Empfangssignals. Auf dem Laufweg 304 ausgesendete Strahlung wird am Objekt 302 in Richtung auf das Reflektorelement 114 reflektiert, wird am Reflektorelement 114 reflektiert und gelangt somit auf dem Laufweg 306, 308 zu den Empfangsstrukturen 124. Dies ist äquivalent zu einem virtuellen Laufweg 306, 310, bei dem gedacht das Reflektorelement bzw. der Spiegel 114 wegfällt und die vom Objekt 302 reflektierte Strahlung auf dem Laufweg 306, 310 an virtuelle Empfangsstrukturen 312 gelangt, die sich unterhalb des Reflektorelements 114 bzw. der dazugehörigen Bodenplatte befinden. Die Position der Empfangsstrukturen 312 entspricht derjenigen der Empfangsstrukturen 124, jedoch gespiegelt an einer Spiegelachse, die in der Ebene der Reflektorplatte 114 liegt.

Fig. 3C veranschaulicht eine weitere einfache Spiegelung des Objekts 302 durch das Reflektorelement 114, nämlich eine Spiegelung des Sendesignals. Auf dem Laufweg 308 ausgesendete Strahlung wird am Reflektorelement 114 in Richtung auf das Objekt 302 reflektiert, wird am Objekt 302 nochmals reflektiert und gelangt so auf dem Laufweg 304 zu den Empfangsstrukturen 106. Dies ist äquivalent zu einem virtuellen Laufweg 310, 306, bei dem Strahlung von einer virtuellen Sendestruktur 314 unterhalb des Reflektorelements 118 auf das Objekt 302 fällt und von dort in Richtung auf die reale Empfangsstruktur 106 gelangt.

Fig. 3D veranschaulicht eine zweifache Spiegelung des Objekts 302 durch das Reflektorelement 114. Hierbei wird auf dem Laufweg 308 ausgesendete Strahlung am Reflektorelement 114 in Richtung auf das Objekt 302 reflektiert. Am Objekt 302 wird die Strahlung zurück zum Reflektorelement 114 reflektiert und dort in Richtung auf die Empfangsstrukturen 106 reflektiert. Dies ist äquivalent zu einem virtuellen Laufweg 310, 306, 306, 310, bei dem Strahlung von der virtuellen Sendestruktur 314 unterhalb des Reflektorelements 118 auf das Objekt 302 fällt und von dort zurück in Richtung auf die virtuelle Empfangsstruktur 312 gelangt.

Die in den Fig. 3B und 3C veranschaulichte einfache Spiegelung bewirkt eine lückenlose Vergrößerung der effektiv ausgeleuchteten Apertur in Richtung der Spiegelfläche, d.h. im Beispiel der Fig. 1 unter den Boden bzw. die Bodenplatte 112. Insbesondere kann die Ausleuchtung von Objekten bzw. Objektbereichen verbessert werden, die sich im wesentlichen parallel zur Antennen- bzw. Sensoranordnung erstrecken, also etwa parallel zum Rahmen 102 in Fig. 1. Hierzu muss sich das Reflektorelement, d.h. die Spiegelfläche in geeigneter Weise zwischen Antennenanordnung und Rahmen erstrecken. Im Beispiel eines Personenscanners kann sich die Ausleuchtung des Unterschenkels einschließlich dort etwa vorhandener Objekte verbessern, wenn die Person auf (oder unmittelbar hinter) einer metallischen Bodenplatte steht, und z.B. auf dem Symbol 116 des Systems 100 in Fig. 1 steht.

Die in Fig. 3D veranschaulichte zweifache Spiegelung bewirkt eine Verbesserung der Detektion von in Bezug auf die Ebene der Antennenanordnung stark geneigten Objekten. Dies schließt die erstmalige oder verbesserte Detektion von Kanten ein.

Mit unbeschichtetem Reflektorelement wird lediglich ein bestimmtes Mehrwegesignal erzeugt, d.h. eine bestimmte Überlagerung von einfachen und zweifachen Spiegelungen. Mit erfindungsgemäß beschichteten Spiegeln kann die Art des Mehrwegesignals kontrolliert werden, d.h. es kann eine gewünschte Kombination von einfachen und zweifachen Spiegelungen mit einer für den konkreten Anwendungsfall optimierten Ausleuchtung bei minimalen Störungen in der Rekonstruktion herbeigeführt werden. Dies wird über eine erfindungsgemäße polarisationswirksame Beschichtung auf dem Reflektorelement erreicht.

Nachfolgend werden zunächst für beispielhafte Konstellationen von einfachen und zweifachen Spiegelungen Änderungen von Polarisationszuständen entlang von Strahlungs- bzw. Signalwegen beschrieben, und zwar jeweils für ein unbeschichtetes Reflektorelement und für ein beschichtetes Reflektorelement.

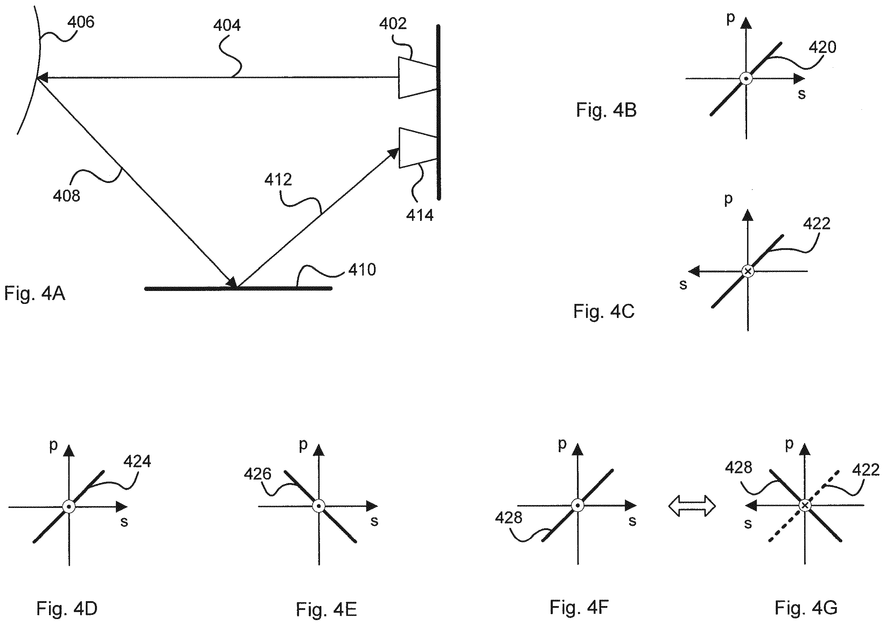

In den Fig. 4A - 4G werden Polarisationszustände für eine einfache Spiegelung des Empfangssignals gemäß Fig. 3B an einem unbeschichteten Spiegel veranschaulicht. Fig. 4A zeigt nochmals in schematischer Form einen Laufweg der Strahlung, die von einer Sendeantenne 402 über einen Pfad bzw. Weg 404 in Richtung auf ein Objekt 406 ausgesendet wird. Vom Objekt 406 wird die Strahlung über einen Laufweg 408 in Richtung auf ein unbeschichtetes Reflektorelement 410 reflektiert. Vom Element 410 wird die Strahlung über einen Laufweg 412 zu einer Empfangsantenne 414 reflektiert.

Fig. 4B veranschaulicht schematisch eine Polarisationsrichtung 420 der Sendeantenne 402, wobei angenommen wird, dass die Antenne 402 linear polarisierte Strahlung aussendet. Bei der Darstellung in Fig. 4A wird die FSA("Forward Scattering Alignment")-Konvention zugrundegelegt. Hierbei entspricht die z-Koordinate eines lokalen rechtshändigen Koordinatensystems der Ausbreitungsrichtung einer elektromagnetischen Welle, die x- und y-Koordinaten entsprechen einer s- bzw. p-Achse, wobei die s- bzw. p-Achse eine Orientierung senkrecht bzw. parallel zu einem Normalenvektor einer als eben angenommenen Oberfläche des Reflektorelements 410 bezeichnen.

Es werden Verhältnisse betrachtet, bei der Strahlung etwa unter einem Winkel von 45° zu einem Normalenvektor der Oberfläche des Reflektorelements 410 auf das Reflektorelement 410 einfällt, bzw. von der Oberfläche des Reflektorelements 410 reflektiert wird. Diese Verhältnisse sind etwa bei dem in Fig. 1 dargestellten System näherungsweise für die in Bodennähe befindliche Antennenanordnung 120 erfüllt, und zwar in Bezug etwa auf eine Ausleuchtung von Unterschenkeln einer Person, die auf dem Symbol 116 steht. Die Diskussion gilt aber ebenso für Einfalls- bzw. Ausfallswinkel in der Nähe von 45°, also etwa in einem Bereich von 30° bis 60°.

Die Polarisation der von der Antenne 402 ausgesendeten Strahlung ist im s/p-Koordinatensystem um 45° geneigt, wie in Fig. 4B gezeigt. Fig. 4C zeigt eine Polarisation 422 der Empfangsantenne 414. Die Polarisation 422 der Empfangsantenne 414 ist identisch zur Polarisation 420 der Sendeantenne 402. Aufgrund der FSA-Konvention erscheinen die Sende- und Empfangspolarisation orthogonal, d.h. die Polarisation 422 der Empfangsantenne 414 ist im s/p-Koordinatensystem ebenfalls um 45° geneigt, erscheint allerdings um 90° gegenüber der Polarisation 420 der Sendeantenne gedreht (vergleiche die unterschiedliche Orientierung der s-Achse in den Fig. 4B und 4C).

Fig. 4D veranschaulicht eine lineare Polarisation 424 der von der Sendeantenne 402 ausgesendeten Strahlung auf dem Laufweg 404, wie sie sich aus der Polarisation 420 der Sendeantenne gemäß Fig. 4B ergibt. Fig. 4E zeigt eine Polarisation 426 der Strahlung nach der Reflektion am Objekt 406 auf dem Laufweg 408. Hierbei wird angenommen, dass eine Reflektion an nicht depolarisierenden Oberflächen des Objekts 406 erfolgt, wie dies etwa für menschliche Hautoberflächen oder glatte metallische Flächen der Fall ist.

Fig. 4F zeigt einen Polarisationszustand 428 der vom Reflektorelement 410 reflektierten Strahlung auf dem Laufweg 412. Im Polarisationszustand 428 trifft die Strahlung am Ort der Empfangsantenne 414 ein. Die Fig. 4G zeigt denselben Polarisationszustand 428 wie die Fig. 4F, allerdings mit einer Darstellungsweise analog zu derjenigen der Fig. 4C, bei der die s-Achse statt nach rechts nach links zeigt. Die Polarisation 422 der Empfangsantenne 414 ist gestrichelt eingezeichnet. Die Polarisationen 428 der einfallenden, einfach am Reflektorelement 410 reflektierten Strahlung ist orthogonal zur Polarisation 422 der Empfangsantenne 414, d.h. der Empfang bzw. die Detektion dieser einfachen Spiegelung ist bei Verwendung eines unbeschichteten Spiegels unterdrückt.

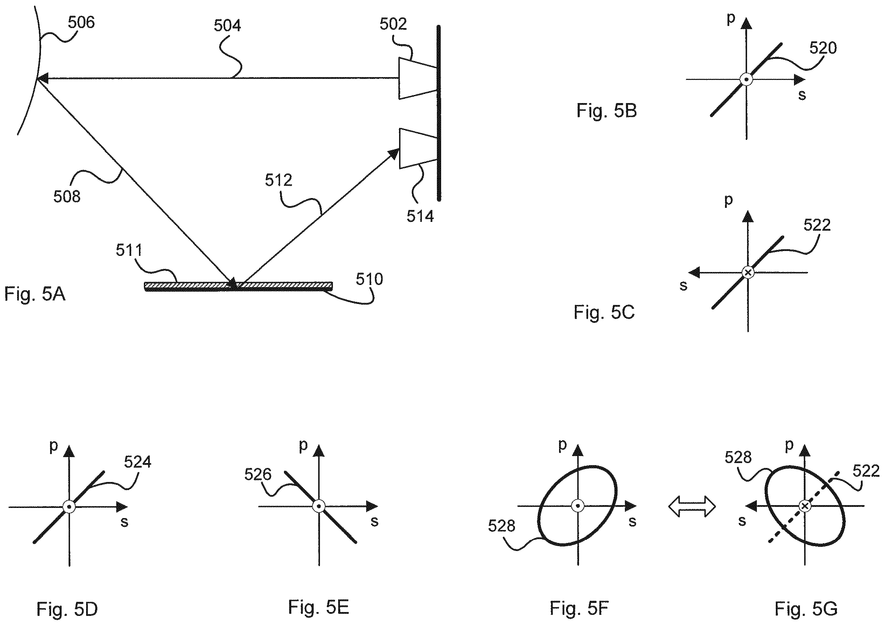

In den Fig. 5A - 5G werden Polarisationszustände für eine einfache Spiegelung des Empfangssignals gemäß Fig. 3B an einem Spiegel mit polarisationswirksamer Beschichtung veranschaulicht. Die Art der Darstellung in den Fig. 5A - 5G entspricht derjenigen der Fig. 4A - 4G. Fig. 5A zeigt in schematischer Form einen Laufweg der Strahlung, die von einer Sendeantenne 502 über einen Weg 504 in Richtung auf ein Objekt 506 ausgesendet wird. Vom Objekt 506 wird die Strahlung über einen Laufweg 508 in Richtung auf ein Reflektorelement 510 mit Beschichtung 511 reflektiert. Vom Element 510, 511 wird die Strahlung über einen Laufweg 512 zu einer Empfangsantenne 514 reflektiert.

Fig. 5B veranschaulicht eine Polarisationsrichtung 520 der Sendeantenne 502, wobei die Antenne 502 wiederum linear polarisierte Strahlung aussendet. Die Polarisation der von der Antenne 502 ausgesendeten Strahlung im s/p-Koordinatensystem ist wiederum um 45° geneigt. Fig. 5C zeigt eine Polarisation 522 der Empfangsantenne 514, die identisch zur Polarisation 520 der Sendeantenne 502 ist, die jedoch im s/p-Koordinatensystem zwar ebenfalls um 45° geneigt, allerdings um 90° gegenüber der Polarisation 520 der Sendeantenne gekippt erscheint.

Fig. 5D veranschaulicht eine lineare Polarisation 524 der von der Sendeantenne 502 ausgesendeten Strahlung auf dem Laufweg 504, wie sie sich aus der Polarisation 520 der Sendeantenne gemäß Fig. 5B ergibt. Fig. 4E zeigt eine Polarisation 526 der Strahlung nach der Reflektion am Objekt 506 auf dem Laufweg 508. Fig. 5F zeigt einen Polarisationszustand 528 der vom Reflektorelement 510 und dessen Beschichtung 511 reflektierten Strahlung auf dem Laufweg 512. Durch den Einfluss der z.B. dielektrischen Beschichtung 511 wird die lineare Polarisation 526 in die elliptische Polarisation 528 transformiert.

Die Strahlung trifft also mit elliptischer Polarisierung bzw. Polarisation am Ort der Empfangsantenne 514 ein. Die Fig. 5G zeigt denselben Polarisationszustand 528 wie Fig. 5F, allerdings mit einer Darstellungsweise analog zu derjenigen der Fig. 5C, wobei die s-Achse statt nach rechts nach links zeigt. Die Polarisation 522 der Empfangsantenne 514 ist gestrichelt eingezeichnet. Eine Halbachse der elliptischen Polarisation 528 der einfallenden, einfach am beschichteten Reflektorelement 410 reflektierten Strahlung steht in Richtung der Polarisation 522 der Empfangsantenne 514, so dass der Empfang bzw. die Detektion dieser einfachen Spiegelung weniger stark unterdrückt ist als bei Verwendung eines unbeschichteten Spiegels, vgl. Fig. 4G. Somit kann diese einfache Spiegelung mit beschichtetem Spiegel besser detektiert werden als mit unbeschichtetem Spiegel.

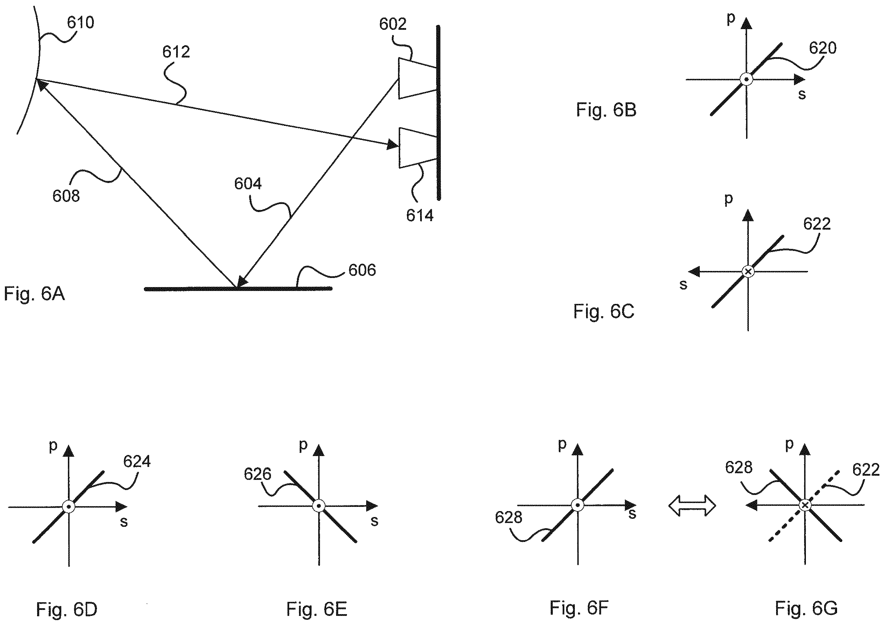

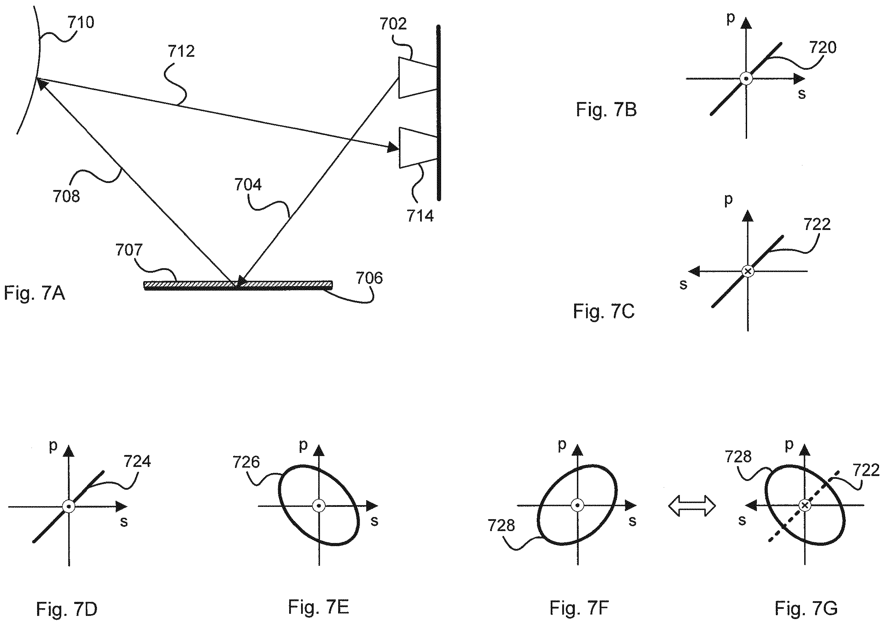

In den Fig. 6A - 6G werden Polarisationszustände für eine einfache Spiegelung des Empfangssignals gemäß Fig. 3C an einem unbeschichteten Spiegel veranschaulicht. Die Art der Darstellung in den Fig. 7A - 7G entspricht derjenigen der Fig. 4A - 4G. Fig. 6A zeigt nochmals in schematischer Form einen Laufweg der Strahlung, die von einer Sendeantenne 602 über einen Weg 604 in Richtung auf ein Reflektorelement 606 ausgesendet wird. Vom Reflektorelement 606 wird die Strahlung über einen Laufweg 608 in Richtung auf ein Objekt 610 reflektiert. Vom Objekt 610 wird die Strahlung über einen Laufweg 612 zu einer Empfangsantenne 614 reflektiert.

Fig. 6B veranschaulicht schematisch eine Polarisationsrichtung 620 der Sendeantenne 602, wobei angenommen wird, dass die Antenne 602 linear polarisierte Strahlung aussendet. Unter den oben in Bezug auf die Fig. 4A - 4G diskutierten Annahmen ist die Polarisation 620 der von der Antenne 602 ausgesendeten Strahlung im s/p-Koordinatensystem um 45° geneigt. Fig. 6C zeigt eine Polarisation 622 der Empfangsantenne 614, die identisch zur Polarisation 620 der Sendeantenne 602 ist, die jedoch im s/p-Koordinatensystem zwar ebenfalls um 45° geneigt, allerdings um 90° gegenüber der Polarisation 620 der Sendeantenne gekippt erscheint.

Fig. 6D veranschaulicht eine lineare Polarisation 624 der von der Sendeantenne 602 ausgesendeten Strahlung auf dem Laufweg 604, wie sie sich aus der Polarisation 620 der Sendeantenne gemäß Fig. 6B ergibt. Fig. 6E zeigt eine Polarisation 626 der Strahlung nach der Reflektion am Reflektorelement 606 auf dem Laufweg 608. Fig. 6F zeigt einen Polarisationszustand 628 der vom Objekt 610 reflektierten Strahlung auf dem Laufweg 612. Im Polarisationszustand 628 trifft die Strahlung am Ort der Empfangsantenne 614 ein.

Die Fig. 6G zeigt denselben Polarisationszustand 628 wie die Fig. 6F, allerdings mit einer Darstellungsweise analog zu derjenigen der Fig. 6C, bei der die s-Achse statt nach rechts nach links zeigt. Die Polarisation 622 der Empfangsantenne 614 ist aus Fig. 6C übernommen und hier gestrichelt eingezeichnet. Die Polarisationen 628 der einfallenden, einfach am Reflektorelement 610 reflektierten Strahlung ist orthogonal zur Polarisation 622 der Empfangsantenne 614, d.h. der Empfang bzw. die Detektion auch dieser Variante der einfachen Spiegelung ist bei Verwendung eines unbeschichteten Spiegels unterdrückt.

In den Fig. 7A - 7G werden Polarisationszustände für eine einfache Spiegelung des Empfangssignals gemäß Fig. 3C an einem Spiegel mit polarisationswirksamer Beschichtung veranschaulicht. Die Art der Darstellung in den Fig. 7A - 7G entspricht derjenigen der Fig. 4A - 4G. Fig. 7A zeigt in schematischer Form einen Laufweg der Strahlung, die von einer Sendeantenne 702 über einen Weg 704 in Richtung auf ein Reflektorelement 706 mit polarisationswirksamer Beschichtung 707 ausgesendet wird. Vom Element 706, 707 wird die Strahlung über einen Laufweg 708 in Richtung auf ein Objekt 710 reflektiert. Vom Objekt 710 wird die Strahlung über einen Laufweg 712 zu einer Empfangsantenne 714 reflektiert.

Fig. 7B veranschaulicht eine Polarisationsrichtung 720 der Sendeantenne 702, wobei die Antenne 702 wiederum linear polarisierte Strahlung aussenden soll. Die Polarisation der von der Antenne 702 ausgesendeten Strahlung im s/p-Koordinatensystem ist um 45° geneigt. Fig. 7C zeigt eine Polarisation 722 der Empfangsantenne 714, die identisch zur Polarisation 720 der Sendeantenne 702 ist, die jedoch im s/p-Koordinatensystem zwar ebenfalls um 45° geneigt, allerdings um 90° gegenüber der Polarisation 720 der Sendeantenne gekippt erscheint.

Fig. 7D veranschaulicht eine lineare Polarisation 724 der von der Sendeantenne 702 ausgesendeten Strahlung auf dem Laufweg 704, wie sie sich aus der Polarisation 720 der Sendeantenne gemäß Fig. 7B ergibt. Fig. 7E zeigt eine Polarisation 726 der Strahlung nach der Reflektion am Reflektorelement 706 mit Beschichtung 707 auf dem Laufweg 708. Durch den Einfluss der z.B. dielektrischen Beschichtung 707 wird die lineare Polarisation 726 in die elliptische Polarisation 728 transformiert.

Fig. 7F zeigt einen Polarisationszustand 728 der vom Objekt 710 reflektierten Strahlung auf dem Laufweg 712. Die Strahlung ist weiterhin elliptisch polarisiert und trifft so am Ort der Empfangsantenne 714 ein. Die Fig. 7G zeigt denselben Polarisationszustand 728 wie Fig. 7F, allerdings mit einer Darstellungsweise analog zu derjenigen der Fig. 7C, wobei die s-Achse statt nach rechts nach links zeigt. Die Polarisation 722 der Empfangsantenne 714 ist gestrichelt eingezeichnet. Eine Halbachse der elliptischen Polarisation 728 der einfallenden, einfach am beschichteten Reflektorelement 706, 707 reflektierten Strahlung steht in Richtung der Polarisation 722 der Empfangsantenne 714, so dass der Empfang bzw. die Detektion dieser einfachen Spiegelung weniger stark unterdrückt ist als bei Verwendung eines unbeschichteten Spiegels, vgl. Fig. 6G, d.h. auch diese Variante der einfachen Spiegelung kann mit beschichtetem Spiegel besser detektiert werden als mit unbeschichtetem Spiegel.

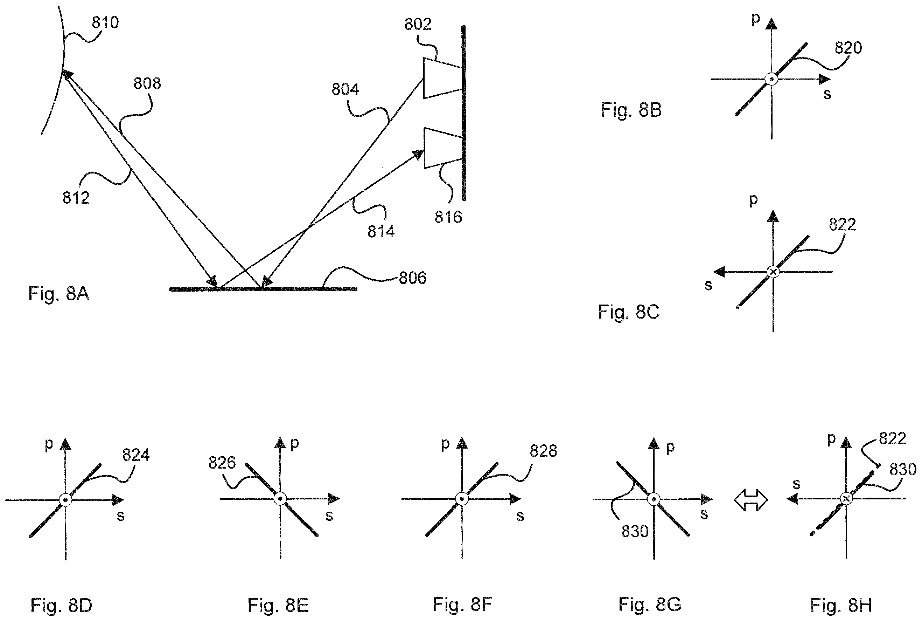

In den Fig. 8A - 8H werden Polarisationszustände für eine zweifache Spiegelung des Empfangssignals gemäß Fig. 3D an einem unbeschichteten Spiegel veranschaulicht. Die Art der Darstellung in den Fig. 8A - 8G entspricht derjenigen der Fig. 4A - 4G. Fig. 8A zeigt in schematischer Form einen Laufweg der Strahlung, die von einer Sendeantenne 802 über einen Weg 804 in Richtung auf ein Reflektorelement 806 ausgesendet wird. Vom Reflektorelement 806 wird die Strahlung über einen Laufweg 808 in Richtung auf ein Objekt 810 reflektiert. Vom Objekt 810 wird die Strahlung über einen Laufweg 812 zurück zum Reflektorelement 806 reflektiert. Vom Reflektorelement 806 wird die Strahlung auf einem Laufweg 814 zu einer Empfangsantenne 816 reflektiert.

Fig. 8B veranschaulicht schematisch eine Polarisationsrichtung 820 der Sendeantenne 802, wobei angenommen wird, dass die Antenne 802 linear polarisierte Strahlung aussendet. Unter den oben in Bezug auf die Fig. 4A - 4G diskutierten Annahmen ist die Polarisation 820 der von der Antenne 802 ausgesendeten Strahlung im s/p-Koordinatensystem um 45° geneigt. Fig. 8C zeigt eine Polarisation 822 der Empfangsantenne 816, die identisch zur Polarisation 820 der Sendeantenne 802 ist, die jedoch im s/p-Koordinatensystem zwar ebenfalls um 45° geneigt, allerdings um 90° gegenüber der Polarisation 820 der Sendeantenne gekippt erscheint.

Fig. 8D veranschaulicht eine lineare Polarisation 824 der von der Sendeantenne 802 ausgesendeten Strahlung auf dem Laufweg 804, wie sie sich aus der Polarisation 820 der Sendeantenne gemäß Fig. 8B ergibt. Fig. 8E zeigt eine Polarisation 826 der Strahlung nach der ersten Reflektion am Reflektorelement 806 auf dem Laufweg 808. Fig. 8F zeigt einen Polarisationszustand 828 der vom Objekt 810 reflektierten Strahlung auf dem Laufweg 812. Fig. 8G zeigt eine Polarisation 830 der Strahlung nach der zweiten Reflektion am Reflektorelement 806 auf dem Laufweg 814. Im Polarisationszustand 830 trifft die Strahlung am Ort der Empfangsantenne 816 ein.

Die Fig. 8G zeigt denselben Polarisationszustand 830 wie die Fig. 8F, allerdings mit einer Darstellungsweise analog zu derjenigen der Fig. 8C, bei der die s-Achse statt nach rechts nach links zeigt. Die Polarisation 822 der Empfangsantenne 816 ist aus Fig. 8C übernommen und hier gestrichelt eingezeichnet. Die Polarisation 830 der einfallenden, zweifach am Reflektorelement 806 reflektierten Strahlung liegt in der gleichen Ebene wie die Polarisation 822 der Empfangsantenne 816, d.h. der Empfang bzw. die Detektion der zweifachen Spiegelung ist bei Verwendung eines unbeschichteten Spiegels bevorzugt.

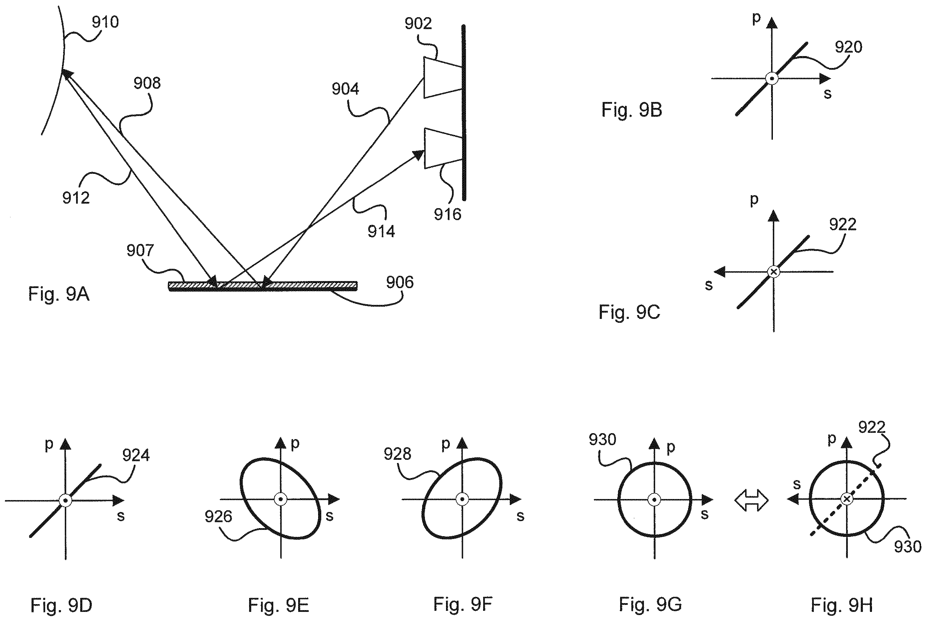

In den Fig. 9A - 9H werden Polarisationszustände für eine zweifache Spiegelung des Empfangssignals gemäß Fig. 3D an einem Spiegel mit polarisationswirksamer Beschichtung veranschaulicht. Die Art der Darstellung in den Fig. 9A - 9H entspricht derjenigen der Fig. 4A - 4G. Fig. 9A zeigt in schematischer Form einen Laufweg der Strahlung, die von einer Sendeantenne 902 über einen Weg 904 in Richtung auf ein Reflektorelement 906 mit polarisationswirksamer Beschichtung 907 ausgesendet wird. Vom Element 906, 907 wird die Strahlung über einen Laufweg 908 in Richtung auf ein Objekt 910 reflektiert. Vom Objekt 710 wird die Strahlung auf einem Laufweg 912 zurück zum beschichteten Reflektorelement 906, 907 reflektiert. Vom Reflektorelement 906, 907 gelangt die Strahlung über einen Laufweg 914 zu einer Empfangsantenne 916.

Fig. 9B veranschaulicht eine Polarisationsrichtung 920 der Sendeantenne 902, wobei die Antenne 902 wiederum linear polarisierte Strahlung aussenden soll. Die Polarisation der von der Antenne 902 ausgesendeten Strahlung im s/p-Koordinatensystem ist um 45° geneigt. Fig. 9C zeigt eine Polarisation 922 der Empfangsantenne 914, die identisch zur Polarisation 920 der Sendeantenne 902 ist, die jedoch im s/p-Koordinatensystem zwar ebenfalls um 45° geneigt, allerdings um 90° gegenüber der Polarisation 920 der Sendeantenne gekippt erscheint.

Fig. 9D veranschaulicht eine lineare Polarisation 924 der von der Sendeantenne 902 ausgesendeten Strahlung auf dem Laufweg 904, wie sie sich aus der Polarisation 920 der Sendeantenne gemäß Fig. 9B ergibt. Fig. 9E zeigt eine Polarisation 926 der Strahlung nach der Reflektion am Reflektorelement 906 mit Beschichtung 907 auf dem Laufweg 908. Durch den Einfluss der z.B. dielektrischen Beschichtung 907 wird die lineare Polarisation 926 in die elliptische Polarisation 928 transformiert.

Fig. 9F zeigt einen Polarisationszustand 928 der vom Objekt 910 reflektierten Strahlung auf dem Laufweg 912. Die Strahlung ist weiterhin elliptisch polarisiert und trifft so am beschichteten Reflektorelement 906, 907 ein. Fig. 9G zeigt einen Polarisationszustand 930 der vom beschichteten Reflektorelement 906, 907 reflektierten Strahlung auf dem Laufweg 914. Durch den erneuten Einfluss der polarisationswirksamen Beschichtung 907 kann sich z.B. eine zirkulare Polarisation 930 ergeben wie in Fig. 9G dargestellt. In dieser Form trifft die Strahlung am Ort der Empfangsantenne 714 ein.

Die Fig. 9H zeigt denselben Polarisationszustand 930 wie Fig. 9G, allerdings mit einer Darstellungsweise analog zu derjenigen der Fig. 9C, wobei die s-Achse statt nach rechts nach links zeigt. Die Polarisation 922 der Empfangsantenne 914 ist gestrichelt eingezeichnet. Nur noch ein Teil der einfallenden, zweifach am beschichteten Reflektorelement 906, 907 reflektierten und nunmehr zirkular polarisierten 930 Strahlung schwingt in Richtung der Polarisation 922 der Empfangsantenne 914, so dass der Empfang bzw. die Detektion dieser zweifachen Spiegelung weniger bevorzugt ist als bei Verwendung eines unbeschichteten Spiegels, vgl. Fig. 8H, d.h. die zweifache Spiegelung kann mit einem beschichtetem Spiegel unterdrückt werden, wenn dies für ein konkretes Abbildungssystem bzw. einen konkreten Scanner wünschenswert ist.

Wie mit den vorstehenden Figuren 4A - 9H veranschaulicht, betrifft ein Aspekt eines erfindungsgemäßen Abbildungssystem z.B. eine gezielte Erzeugung eines Mehrwegesignals durch Kombination eines bildgebenden Radarsensors bzw. einer Anordnung von Sende- und Empfangsantennen mit einem Reflektorelement, bspw. einer spiegelnden metallischen Fläche. Eine gezielte Selektion bestimmter Anteile des Mehrwegesignals ist bspw. mittels Transformation einer linearen Polarisation in eine elliptische Polarisation durch die Reflexion an einer in dieser Weise polarisationswirksamen Beschichtung des Reflektorelements möglich. Hierauf abgestimmt sollten die Sende-/Empfangsantennen bspw. linear polarisierte Strahlung aussenden bzw. für linear polarisierte Strahlung empfindlich sein.

Das Vorsehen einer polarisationswirksamen Spiegelbeschichtung, die eine lineare Polarisation in eine elliptische Polarisation überführt, kann im Vergleich zu einem unbeschichteten Spiegel eine Empfangsleistung der einfach gespiegelten Mehrwegesignale erhöhen. Dabei kann eine Maximierung des Empfangspegels der einfachen Spiegelung zu einer Minimierung der Empfangsleistung der zweifachen Spiegelung führen.

Mit anderen Worten ist eine detektierte Leistung eines bestimmten Anteils eines Mehrwegesignals abhängig vom Vorhandensein oder Nichtvorhandensein einer Beschichtung, und der genauen Eigenschaften der Beschichtung, wie unten weiter diskutiert wird. So gilt für Anordnungen wie die oben diskutierte bei einer ungeradzahligen Anzahl an Reflektionen an der Beschichtung, z.B. für einfache Spiegelung, dass ohne Beschichtung ein geringer Pegel der einfachen Spiegelung detektiert wird, d.h. diese Signalanteile werden unterdrückt, während mit Beschichtung eine Detektierbarkeit dieses Signalanteils verbessert werden kann. Für eine geradzahlige Anzahl an Reflektionen, bspw. zweifache Spiegelungen, wird bei diesen Anordnungen ohne Beschichtung ein maximaler Pegel detektiert, d.h. dieser Signalanteil wird betont. Mit einer Beschichtung kann dieser Anteil des Mehrwegesignals in der Detektion verringert werden.

Entsprechend dem unterschiedlichen Charakter der einfachen und zweifachen Spiegelung kann ein Mehrwegesignal besonders zur Verbesserung einer frontalen Objektausleuchtung genutzt werden. Dies wird erreicht, indem die einfachen Spiegelungen besonders gut detektierbar gemacht werden. Soll das Mehrwegesignal besonders zur selektiven Detektion weiterer Reflexionsmerkmale wie z.B. Kanten genutzt werden, kann dies erreicht werden, indem zweifache Spiegelungen gegenüber einfachen Spiegelungen bevorzugt werden. Eine derartige Nutzungsart ist die einzige, die unter Umständen auch mittels unbeschichteter Spiegel erreicht werden kann. Erfindungsgemäß lassen sich darüber hinaus auch Überlagerungen einfacher und zweifacher Spiegelungen nutzen, sofern dies angezeigt erscheint für eine optimale Abbildungsqualität einschließlich guter Ausleuchtung bei bestmöglicher Unterdrückung von Störungen bei der Bildrekonstruktion.

Die beschriebenen Aspekte können für beliebige Antennenanordnungen realisiert werden, bspw. für mono- oder multistatische Konstellationen, und/oder für ein-, zwei- oder dreidimensionale Antennenanordnungen. An sich bekannte Verfahren der digitalen Fokussierung (DBF) können verwendet werden.

Die Beschichtung des Reflektorelements kann mit einem vorzugsweise verlustarmen Dielektrikum erfolgen; es kann bspw. ein nichtleitendes Dielektrikum, d.h. ein isolierendes Material verwendet werden, welches zur Einstellung der bevorzugten Nutzung des verfügbaren Mehrwegesignals mit spezifischer Dicke und Permittivität als Beschichtung auf das Reflektorelement aufzubringen ist.

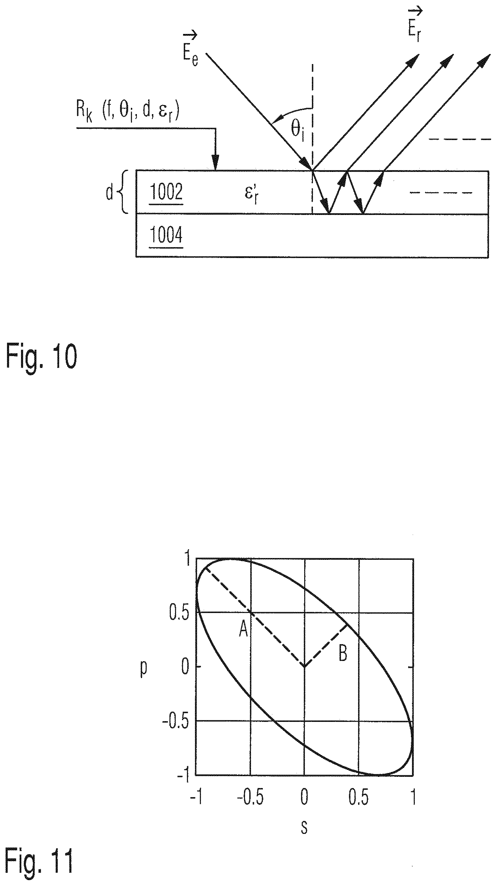

Unter Bezug auf Fig. 10 wird nachfolgend eine Einstellung des Empfangspegels bestimmter Anteile eines Mehrwegesignals für den Fall einer Transformation einer linear polarisierten elektromagnetischen Welle in eine elliptisch polarisierte Welle, insbesondere zur gezielten Selektion der einfachen und/oder zweifachen Spiegelung durch Anwendung der Fresnel'schen Reflexionsformeln für ein planparalleles homogenes Dielektrikum 1002 auf einem metallischen Halbraum 1004 demonstriert. Hierbei wird von einer linear polarisierten Welle ausgegangen, die um 45° zur Flächennormalen gekippt ist.

Für den Reflektionsfaktor der Beschichtung gilt (k = p,s):

$$R_k(f, \theta_i, d, \varepsilon_r) = \frac{r_k - e^{-j2\beta d}}{1 - r_k e^{-j2\beta d}} = \left| R_k(f, \theta_i, d, \varepsilon_r) \right| e^{j\varphi_k(f, \theta_i, d, \varepsilon_r)}$$

Für das Ausbreitungsmaß im Dielektrikum gilt:

$$\beta(f, \theta_i, \varepsilon_r) = \frac{2\pi f}{c_0} \sqrt{\varepsilon_r - \sin^2 \theta_i}$$

Der Grenzschichtreflektionsfaktor für parallele Polarisation lautet:

$$r_p(\theta_i, \varepsilon_r) = \frac{\varepsilon_r \cos\theta_i - \sqrt{\varepsilon_r - \sin^2\theta_i}}{\varepsilon_r \cos\theta_i + \sqrt{\varepsilon_r - \sin^2\theta_i}}$$

Für den Grenzschichtreflektionsfaktor für senkrechte Polarisation gilt:

$$r_s(\theta_i, \varepsilon_r) = \frac{\cos\theta_i - \sqrt{\varepsilon_r - \sin^2\theta_i}}{\cos\theta_i + \sqrt{\varepsilon_r - \sin^2\theta_i}}$$

Für ein verlustloses Dielektrikum mit Rückmetallisierung gilt:

$$\left| R_k(f, \theta_i, d, \varepsilon_r) \right| = 1$$

Damit gilt für den Reflexionsfaktor der Beschichtung (k = p, s) :

$$R_k(f, \theta_i, d, \varepsilon_r) = e^{j\varphi_k(f,\theta_i,d,\varepsilon_r)}$$

Für die einfallende Welle in der Fig. 10 gilt:

$$\overrightarrow{E_e} = \begin{bmatrix} E_S \\ E_P \end{bmatrix} = E_0 \begin{bmatrix} 1 \\ 1 \end{bmatrix}$$

Für die reflektierte Welle ergibt sich:

$$\overrightarrow{E_r} = \begin{bmatrix} R_S & 0 \\ 0 & -R_P \end{bmatrix} \cdot \overrightarrow{E_e} = \begin{bmatrix} E_S \\ -E_P \cdot e^{i\Delta\varphi} \end{bmatrix} \cdot e^{i\varphi_S}$$

Hierbei ist die Matrix auf der linken Seite der Gleichung die Streumatrix der beschichteten Spiegelfläche unter Verwendung der FSA-Konvention.

In obigen Gleichungen bedeuten:

$f$: Frequenz der Strahlung
$\theta$: Einfallswinkel

d: Dicke des Dielektrikums
$\varepsilon_r$: relative Permittivität
$\varphi_k$: Phasenfaktor
$C_0$ : Lichtgeschwindigkeit im Vakuum

Bei einem verlustlosen Dielektrikum mit metallisierter Rückseite wird die gesamte Leistung reflektiert. Allerdings resultiert nach der Reflektion an der dielektrischen Schicht ein Phasenversatz $\Delta\varphi$ zwischen senkrechter (s) und paralleler (p) Polarisationskomponente des reflektierten E-Feldes. Die Ursache hierfür ist ein unterschiedlicher Reflexionsfaktor $R_S$ bzw. $R_P$ für die beiden Polarisationskomponenten.

Fig. 11 zeigt die resultierende Polarisationsellipse 1100. Der Phasenversatz $\Delta\varphi$ bestimmt die Form der Polarisationsellipse 1100. Die mit "B" bezeichnete Halbachse repräsentiert die relevante Polarisationsachse für die einfachen Spiegelungen. Die mit "A" bezeichnete Halbachse repräsentiert die relevante Polarisationsachse für die zweifache Spiegelung, wie dies in den Fig. 4 - 9 veranschaulicht ist.

Zur Auslegung einer Beschichtung für ein konkretes System kann wie folgt vorgegangen werden: Zunächst kann der gewünschte Phasenversatz $\Delta\varphi$ zwischen den senkrechten und parallelen Polarisationskomponenten in Abhängigkeit von einer gewünschten Ver- bzw. Ankopplung (mehr Details hierzu weiter unten) an die Empfangsantennen für die einfach und zweifach gespiegelten Mehrwegesignalanteile bestimmt werden. Sodann kann die relative Permittivität der Beschichtung festgelegt werden, mit welcher der gewünschte Phasenversatz $\Delta\varphi$ erreicht werden kann. Weiterhin kann die Beschichtungsdicke **d** festgelegt so werden, dass die Reflexionseigenschaften im Betriebsfrequenzbereich und für die erwarteten Einfallswinkel $\theta_i$ optimal sind.

Diese Schritte können auch in anderer als der angegebenen Reihenfolge durchgeführt werden. Sollen bspw. handelsüblich Beschichtungsmaterialien und/oder Konfektionierungen eingesetzt werden, sind ggf. die angegebenen Schritte mehrfach iterativ zu durchlaufen.

Als ein Maß für die mögliche Unterdrückung oder Betonung einfach bzw. zweifach gespiegelter Mehrwegesignalanteile kann eine Verkopplung **C**, in Abhängigkeit von einem Phasenversatz $\Delta\varphi$, zwischen einem reflektierten elektrischen Feld *Er* und einer Empfangsantenne berechnet werden. Die Ver- bzw. Ankoppelung **C** kann bspw. unter der Annahme eines metallischen nicht-depolarisierenden Streuers abgeschätzt werden. Bezüglich der Streumatrizen und der Polarisationsvektoren wird wieder die FSA-Konvention verwendet.

Für den Polarisationsvektor der Sendeantenne gilt:

$$\vec{T} = \tfrac{1}{\sqrt{2}}\begin{bmatrix} 1 & 1 \end{bmatrix}^T$$

Für den Polarisationsvektor der Empfangsantenne gilt:

$$\vec{R} = \tfrac{1}{\sqrt{2}}\begin{bmatrix} 1 & -1 \end{bmatrix}^T$$

Die Streumatrix eines metallischen Ziels lautet:

$$\underline{S} = \begin{bmatrix} 1 & 0 \\ 0 & -1 \end{bmatrix}$$

Die Streumatrix der beschichteten Spiegelfläche lautet:

$$\underline{M} = \begin{bmatrix} 1 & 0 \\ 0 & -1e^{j\Delta\varphi} \end{bmatrix}$$

Für die Ankopplung eines einfach gespiegelten Signals gilt dann:

$$C_{1\text{-fach}} \sim \left| \vec{T}\underline{S}\underline{M}\vec{R} \right|^2 = \ldots = \tfrac{1}{2}\left(1 - \cos\Delta\varphi\right)$$

Für die Ankopplung eines zweifach gespiegelten Signals, die abhängig vom zweifachen Phasenversatz $\Delta\varphi$ ist, weil die Welle zweimal an der Beschichtung reflektiert wird, gilt:

$$C_{2\text{-fach}} \sim \left| \vec{T}\underline{M}\underline{S}\underline{M}\vec{R} \right|^2 = \ldots = \tfrac{1}{2}\left(1 + \cos 2\Delta\varphi\right)$$

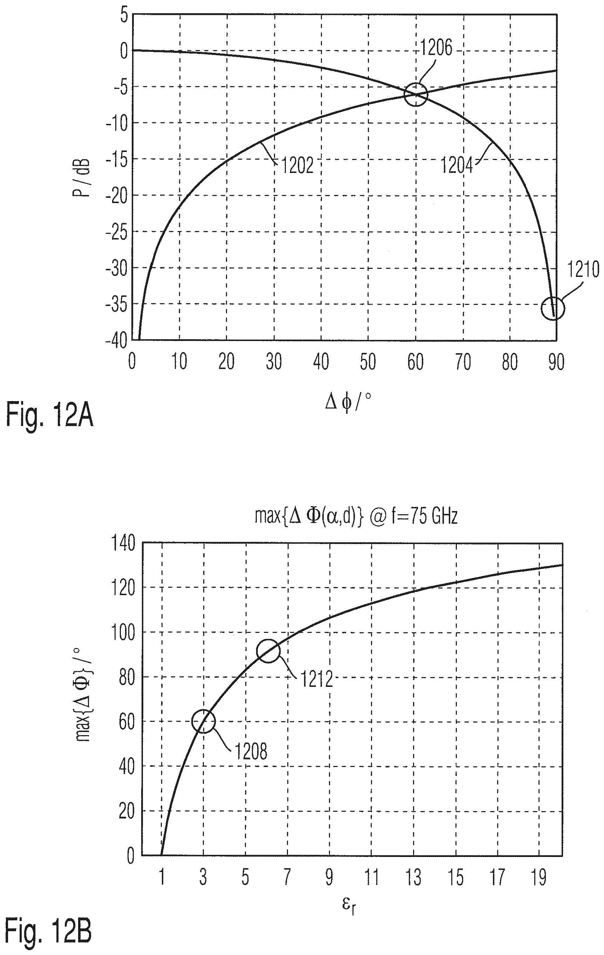

Fig. 12A stellt diese Zusammenhänge für die einfache 1202 und die zweifache 1204 Spiegelung graphisch dar.

Bei einem nicht depolarisierenden Objekt bestimmt also im wesentlichen der Phasenversatz $\Delta\varphi$ die maximale Verkopplung $C$ zwischen Empfangsantenne und reflektiertem elektrischen Feld $Er$, welches in Fig. 12A als Abschwächung einer Empfangsstärke **P** in Dezibel (dB) repräsentiert ist.

Fig. 12B stellt den maximalen Phasenversatz $\Delta\varphi$ in Abhängigkeit von der relativen Permittivität $\varepsilon_r$ des Beschichtungsmaterials dar. Aus den Fig. 12A und 12B lassen sich die Anforderungen an die Permittivität des Beschichtungsmaterials ermitteln, die erforderlich sind, um eine bestimmte Konstellation von Mehrwegesignalanteilen an der Empfangsantenne zu erreichen.

Soll bspw. eine Überlagerung von einfachen und zweifachen Spiegelungen an der Antenne detektierbar sein, dann bedeutet dies eine etwa gleich starke Ankoppelung an die Antenne, d.h. die durch den Kreis 1206 bezeichnete Position im Graph der Fig. 12A. Aus der Position 1206 ergibt sich ein Phasenversatz von etwa 60°, der bei einer relativen Permittivität von etwa $\varepsilon_r$=3 erreicht wird, wie sich aus Fig. 12B, Ziffer 1208 ergibt. Derartige Permittivitäten werden etwa mit Plexiglas erreicht, wie oben anhand von Fig. 2 diskutiert.

Soll die zweifache Spiegelung unterdrückt werden und die einfache Spiegelung bevorzugt detektierbar sein, dann entspricht dies einem Phasenversatz im Bereich von 90° in der Fig. 12A, Ziffer 1210. Aus der Fig. 12B ergibt sich die erforderliche Permittivität zu etwa $\varepsilon_r$=6 (Ziffer 1212). Beispielsweise verfügt C1-Kautschuk über eine Permittivität in diesem Bereich.

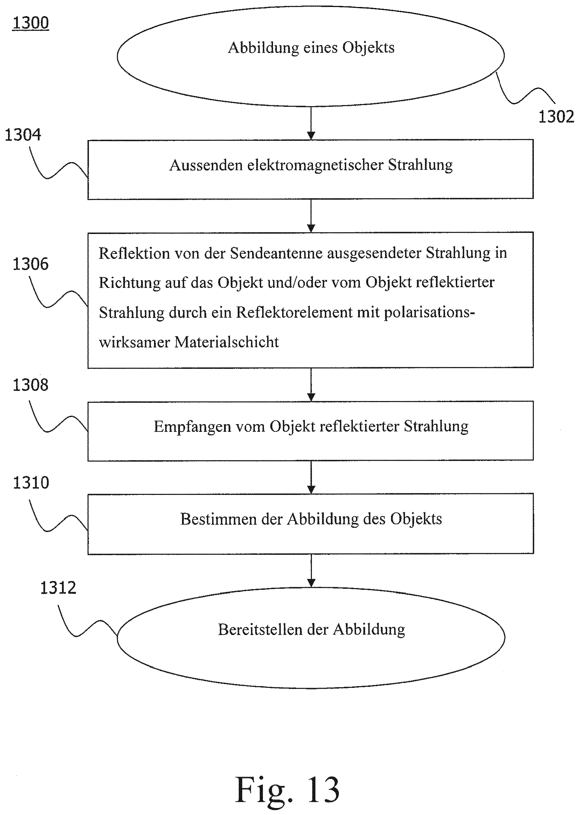

Fig. 13 veranschaulicht in Form eines Flussdiagramms ein Verfahren 1300 zur Abbildung eines Objekts 1302. Das Verfahren 1300 kann etwa als Betriebsverfahren eines Abbildungssystems, etwa eines Personenscanners, implementiert werden.

In einem Schritt 1304 wird elektromagnetische Strahlung in einem ersten Polarisationszustand zur Ausleuchtung des Objekts ausgesendet. Die Strahlung kann etwa linear polarisiert mit einer bestimmten Schwingungsebene im Raum von einer Sendeantenne ausgesendet werden.

In einem Schritt 1306 kommt es zur Reflektion, an mindestens einem Reflektorelement, von der Sendeantenne ausgesendeter Strahlung in Richtung auf das Objekt und/oder zur Reflektion vom Objekt reflektierter Strahlung in Richtung auf eine Empfangsantenne. Hierbei wird ein vom Reflektorelement reflektierter Strahlungsanteil durch eine polarisationswirksame Materialschicht auf dem Reflektorelement in einen Polarisationszustand derart überführt, dass der Strahlungsanteil an der Empfangsantenne im zweiten Polarisationszustand ist.

In einem Schritt 1308 wird vom Objekt reflektierte Strahlung eines zweiten Polarisationszustandes empfangen. Bspw. kann die Strahlung von einer Empfangsantenne empfangen werden, die für eine lineare Polarisation mit einer bestimmten Schwingungsebene bevorzugt empfindlich ist. Die Schwingungsebenen von Sende- und Empfangsantennen können übereinstimmen, oder können gegeneinander gekippt sein.

In einem Schritt 1310 wird eine Abbildung des Objekts basierend auf der von der Empfangsantenne empfangenen Strahlung bestimmt. Techniken der synthetischen Fokussierung können senderseitig dem Schritt 1304 vorgelagert, und/oder empfängerseitig als Teil des Schritts 1310 durchgeführt werden. Diese Techniken können an die bevorzugt zu detektierenden Mehrwegesignalanteile angepasst werden.

Für Systeme mit einer Mehrzahl an Empfangs- und/oder Sendeantennen, die etwa in einem multistatischen Modus betrieben werden, sind die Schritte mehrfach, und ggf. ganz oder teilweise parallel auszuführen.

Das Verfahren endet im Schritt 1312 bspw. mit der Ausgabe der bestimmten Abbildung auf einem Anzeigeschirm.

Theoretische Erklärungen von der Erfindung bewirkter technischer Effekte sollen den Geltungsbereich der Erfindung nicht einschränken. Auch ist die Erfindung nicht auf die hier beschriebenen Ausführungsbeispiele und die darin hervorgehobenen Aspekte beschränkt; vielmehr sind innerhalb des durch die anhängenden Ansprüche angegebenen Bereichs eine Vielzahl von Abwandlungen möglich, die im Rahmen fachmännischen Handelns liegen. Insbesondere sind dem Fachmann bestimmte Kombinationen von vorstehend separat beschriebenen Merkmalen als zweckmäßig oder vorteilhaft ersichtlich.

**Patentansprüche**

1.  System zur Abbildung eines Objekts, mit
    mindestens einer Sendeantenne (104, 502, 702, 902) zur Aussendung elektromagnetischer Strahlung eines ersten Polarisationszustandes (520, 720, 920) zur Ausleuchtung des Objekts (506, 710, 910), wobei die Sendeantenne (104, 502, 702, 902) zur Aussendung einer linear polarisierten Strahlung ausgebildet ist;
    mindestens einer Empfangsantenne (106, 514, 714, 916) zum Empfang vom Objekt (506, 710, 910) reflektierter Strahlung in einem zweiten Polarisationszustand (522, 722, 922), der ein linearer Polarisationszustand ist;
    mindestens einem Reflektorelement (114, 510, 706, 906) zur Reflektion von der Sendeantenne (104, 702, 902) ausgesendeter Strahlung in Richtung auf das Objekt (710, 910) und/oder zur Reflektion vom Objekt (506, 910) reflektierter Strahlung in Richtung auf die Empfangsantenne (112, 514, 916), wobei die ausgesendete Strahlung unter einem Winkel von 30° bis 60° zu einem Normalenvektor der Oberfläche des Reflektorelements (114, 510, 706, 906) auftrifft;

einer polarisationswirksamen Materialschicht (118, 511, 707, 907) auf dem Reflektorelement (114, 510, 706, 906), um einen vom Reflektorelement (114, 510, 706, 906) reflektierten Strahlungsanteil in einen elliptischen oder zirkularen Polarisationszustand (528, 728, 930) so zu überführen, dass ein Strahlungsanteil der in der Empfangsantenne empfangenen Strahlung der Schwingungsrichtung des zweiten Polarisationszustandes (522, 722, 922) der Empfangsantenne entspricht; und

einer Verarbeitungseinheit (110) zur Bestimmung der Abbildung des Objekts (506, 710, 910) basierend auf der von der Empfangsantenne (106, 514, 714, 916) empfangenen Strahlung.

2. System nach Anspruch 1,
**dadurch gekennzeichnet, dass**
die Materialschicht (118) ein Dielektrikum umfasst.

3. System nach einem der vorhergehenden Ansprüche,
**dadurch gekennzeichnet, dass**
die Materialschicht (511, 707) derart ausgebildet ist, dass ein vom Reflektorelement (510, 706) einfach reflektierter Strahlungsanteil an der Empfangsantenne (514, 714) detektiert wird.

4. System nach Anspruch 3,
**dadurch gekennzeichnet, dass**
die Materialschicht derart ausgebildet ist, dass an der Empfangsantenne eine Überlagerung aus dem einfach reflektierten Strahlungsanteil und einem vom Reflektorelement (906) zweifach reflektierten Strahlungsanteil detektiert wird.

5. System nach einem der vorhergehenden Ansprüche,
**dadurch gekennzeichnet, dass**
die Empfangsantenne (514, 714, 916) zum Empfang linear polarisierter Strahlung (522, 722, 922) ausgebildet ist.

6. System nach Anspruch 5,
**dadurch gekennzeichnet, dass**
das Reflektorelement (114) mit der Materialschicht (118) in Bezug auf eine Ebene (102), in der die Sende- und/oder Empfangsantennen angeordnet sind, um 45° bis 135°, bevorzugt 80° bis 100°, verkippt ist.

7. System nach einem der vorhergehenden Ansprüche,
**dadurch gekennzeichnet, dass**
die Materialschicht (118) eine Beschichtung aus Polyethylenterephthalat, Polycarbonat, Glas, Acrylglas, und/oder Kautschuk aufweist.

8. System nach einem der vorhergehenden Ansprüche,
**dadurch gekennzeichnet, dass**
eine Dicke (210) der Materialschicht (118) kleiner als ein Viertel einer Wellenlänge der Strahlung ist.

9. System nach einem der vorhergehenden Ansprüche,
**dadurch gekennzeichnet, dass**
die relative Permittivitätszahl des Materials der Materialschicht (118) 2 bis 4,5 ist, bevorzugt 2,5 bis 3,5, oder dass die relative Permittivitätszahl des Materials der Materialschicht (118) größer als 5 ist, bevorzugt größer oder gleich 6.

10. System nach einem der vorhergehenden Ansprüche, **gekennzeichnet durch**
eine Mehrzahl von Sende (104)- und/oder Empfangsantennen (106) zum Betrieb in einer monostatischen oder einer multistatischen Konstellation.

11. System nach einem der vorhergehenden Ansprüche,
**dadurch gekennzeichnet, dass**
die Verarbeitungseinheit (110) ausgebildet ist, um eine senderseitige und/oder empfangsseitige synthetische Fokussierung vorzunehmen.

12. Verfahren zur Abbildung eines Objekts, mit den folgenden Schritten:

Aussenden (1304) elektromagnetischer Strahlung eines ersten Polarisationszustandes, der ein linearer Polarisationszustand ist, zur Ausleuchtung des Objekts;

Reflektieren (1306) von zumindest einer Sendeantenne ausgesendeter Strahlung an mindestens einem Reflektorelement in Richtung auf das Objekt, wobei die Sendeantenne zur Aussendung einer linear polarisierten Strahlung ausgebildet ist, und/oder vom Objekt reflektierter Strahlung in Richtung auf zumindest eine Empfangsantenne, wobei die ausgesendete Strahlung unter einem Winkel von 30° bis 60° zu einem Normalenvektor der Oberfläche des Reflektorelements auftrifft und wobei durch eine polarisationswirksame Materialschicht auf dem Reflektorelement ein vom Reflektorelement reflektierter Strahlungsanteil in einen elliptischen oder zirkularen Polarisationszustand überführt wird,;

Empfangen (1308) vom Objekt reflektierter Strahlung eines zweiten Polarisationszustandes, der ein linearer Polarisationszustand ist, wobei ein Strahlungsanteil der in der Empfangsantenne empfangenen Strahlung der Schwingungsrichtung des zweiten Polarisationszustandes (522, 722, 922) der Empfangsantenne entspricht; und Bestimmen (1310) der Abbildung des Objekts basierend auf der von der Empfangsantenne empfangenen Strahlung.

## Claims

1. A system for imaging an object, with at least one transmitting antenna (104, 502, 702, 902) for the transmission of electromagnetic radiation of a first polarisation state (520, 720, 920) in order to illuminate the object (506, 710, 910), wherein the transmitting antenna (104, 502, 702, 902) is constituted for the transmission of a linear polarised radiation; at least one receiving antenna (106, 514, 714, 916) for the reception of radiation reflected from the object in a second polarisation state (522, 722, 922), which is a linear polarisation state; at least one reflector element (114, 510, 706, 906) for the reflection of radiation transmitted from the transmitting antenna (104, 702, 902) in the direction towards the object (710, 910) and/or for the reflection of radiation reflected from the object (506, 910) in the direction towards the receiving antenna (112, 514, 916), wherein the transmitted radiation impinges with an angle from 30° to 60° to a normal vector of the surface of the reflector element (114, 510, 706, 906); an actively polarising material layer (118, 511, 707, 907) on the reflector element (114, 510, 706, 906) in order to transform a radiation component reflected from the reflector element (114, 510, 706, 906) in an elliptical or circular polarisation state (528, 728, 930), such that a radiation component of the radiation received in the receiving antenna corresponds to the oscillation direction of the second polarisation state (522, 722, 922) of the receiving antenna; and a processing unit (110) for the determination of the imaging of the object (506, 710, 910) based on the radiation received by the receiving antenna (106, 514, 714, 916).

2. The system according to claim 1,
   **characterised in that,**
   the material layer (118) comprises a dielectric.

3. The system according to any one of the preceding claims,
   **characterised in that,**
   the material layer (511, 707) is constituted in such a manner that a radiation component reflected once from the reflector element (510, 706) is detected in the receiving antenna (514, 714).

4. The system according to claim 3,
   **characterised in that,**
   the material layer is constituted in such a manner that, in the receiving antenna, a superposition of the radiation component reflected once and a radiation component reflected twice from the reflector element (906) is detected.

5. The system according to any one of the preceding claims,
   **characterised in that,**
   the receiving antenna (514, 714, 916) is constituted for the reception of linear polarised radiation (522, 722, 922) .

6. The system according to claim 5,
   **characterised in that,**
   the reflector element (114) with the material layer (118) is tilted, with reference to a plane (102) in which the transmitting and/or receiving antennas are arranged, by 45° to 135°, preferably 80° to 100°.

**7.** The system according to any one of the preceding claims,
**characterised in that,**
the material layer (118) comprises a coating made of polyethylene terephthalate, polycarbonate, glass, acrylic glass and/or rubber.

**8.** The system according to any one of the preceding claims,
**characterised in that,**
a thickness (210) of the material layer (118) is smaller than one quarter of a wavelength of the radiation.

**9.** The system according to any one of the preceding claims,
**characterised in that,**
the relative permittivity number of the material of the material layer (118) is 2 to 4.5, preferably 2.5 to 3.5, or that the relative permittivity number of the material of the material layer (118) is greater than 5, preferably greater than or equal to 6.

**10.** The system according to any one of the preceding claims,
**characterised by**
a plurality of transmitting antennas (104) and/or receiving antennas (106) for operation in a mono-static or multi-static configuration.

**11.** The system according to any one of the preceding claims,
**characterised in that,**
the processing unit (110) is constituted to implement a synthetic focusing at the transmitting end and/or the receiving end.

**12.** A method for the imaging of an object with the following steps:

transmission (1304) of electromagnetic radiation of a first polarisation state, which is a linear polarisation state, in order to illuminate the object;
reflection (1306) of radiation transmitted from at least one transmitting antenna to at least one reflector element in the direction towards the object, wherein the transmitting antenna is constituted for the transmission of a linear polarised radiation, and/or of radiation reflected from the object in the direction towards at least one receiving antenna, wherein the transmitted radiation impinges with an angle from 30° to 60° to a normal vector of the surface of the reflector element, and
wherein, through an actively polarising material layer on the reflector element, a radiation component reflected from the reflector element is transformed into an elliptical or circular polarisation state;
reception (1308) of radiation of a second polarisation state, which is a linear polarisation state, reflected from the object, wherein a radiation component of the radiation received in the receiving antenna corresponds to the oscillation direction of the second polarisation state (522, 722, 922) of the receiving antenna; and determination (1310) of the imaging of the object based on the radiation received from the receiving antenna.


**Revendications**

**1.** Système d'imagerie d'un objet, comprenant
au moins une antenne émettrice (104, 502, 702, 902) destinée à émettre un rayonnement électromagnétique présentant un premier état de polarisation (520, 720, 920) pour l'éclairage de l'objet (506, 710, 910), dans lequel l'antenne émettrice (104, 502, 702, 902) est conçue pour émettre un rayonnement polarisé linéairement ;
au moins une antenne réceptrice (106, 514, 714, 916) destinée à recevoir le rayonnement réfléchi par l'objet (506, 710, 910) dans un deuxième état de polarisation (522, 722, 922), qui est un état de polarisation linéaire ;
au moins un élément réflecteur (114, 510, 706, 906) destiné à réfléchir le rayonnement émis par l'antenne émettrice (104, 702, 902) en direction de l'objet (710, 910) et/ou à réfléchir le rayonnement réfléchi par l'objet (506, 910) en direction de l'antenne réceptrice (112, 514, 916), dans lequel le rayonnement émis est incident en formant un angle de 30° à 60° par rapport à un vecteur normal de la surface de l'élément réflecteur (114, 510, 706, 906) ;
une couche de matériau (118, 511, 707, 907) polarisante sur l'élément réflecteur (114, 510, 706, 906), afin de transférer une part de rayonnement réfléchie par l'élément réflecteur (114, 510, 706, 906) dans un état de polarisation (528, 728, 930) elliptique ou circulaire, de telle sorte qu'une part du rayonnement reçu dans l'antenne réceptrice correspond au sens de vibration du deuxième état de polarisation (522, 722, 922) de l'antenne réceptrice ; et

une unité de traitement (110) destinée à déterminer l'imagerie de l'objet (506, 710, 910) sur la base du rayonnement reçu par l'antenne réceptrice (106, 514, 714, 916).

2. Système selon la revendication 1,
**caractérisé en ce que**
la couche de matériau (118) comporte un diélectrique.

3. Système selon l'une quelconque des revendications précédentes,
**caractérisé en ce que**
la couche de matériau (511, 707) est conçue de telle sorte qu'une part de rayonnement réfléchie une fois par l'élément réflecteur (510, 706) est détectée sur l'antenne réceptrice (514, 714).

4. Système selon la revendication 3,
**caractérisé en ce que**
la couche de matériau est conçue de telle manière qu'une superposition composée de la part de rayonnement réfléchie une fois et d'une part de rayonnement réfléchie deux fois par l'élément réflecteur (906) est détectée sur l'antenne réceptrice.

5. Système selon l'une quelconque des revendications précédentes,
**caractérisé en ce que**
l'antenne réceptrice (514, 714, 916) est conçue pour recevoir un rayonnement (522, 722, 922) polarisé linéairement.

6. Système selon la revendication 5,
**caractérisé en ce que**
l'élément réflecteur (114) comprenant la couche de matériau (118) est incliné de 45° à 135°, de préférence de 80° à 100°, par rapport à un plan (102) dans lequel les antennes émettrices et/ou réceptrices sont agencées.

7. Système selon l'une quelconque des revendications précédentes,
**caractérisé en ce que**
la couche de matériau (118) présente un revêtement composé de polyéthylènetéréphtalate, de polycarbonate, de verre, de verre acrylique et/ou de caoutchouc.

8. Système selon l'une quelconque des revendications précédentes,
**caractérisé en ce que**
une épaisseur (210) de la couche de matériau (118) est inférieure à un quart d'une longueur d'onde du rayonnement.

9. Système selon l'une quelconque des revendications précédentes,
**caractérisé en ce que**
le facteur de permittivité relative du matériau de la couche de matériau (118) est 2 à 4,5, de préférence 2,5 à 3,5, ou **en ce que** le facteur de permittivité relative du matériau de la couche de matériau (118) est supérieure à 5, de préférence supérieure ou égale à 6.

10. Système selon l'une quelconque des revendications précédentes,
**caractérisé par**
une pluralité d'antennes émettrices (104) et/ou réceptrices (106) destinées à fonctionner dans une constellation monostatique ou multistatique.

11. Système selon l'une quelconque des revendications précédentes,
**caractérisé en ce que**
l'unité de traitement (110) est conçue pour réaliser une focalisation synthétique côté émission et/ou côté réception.

12. Procédé d'imagerie d'un objet, comprenant les étapes suivantes :

l'émission (1304) d'un rayonnement électromagnétique présentant un premier état de polarisation, qui est un état de polarisation linéaire, pour éclairer l'objet ;
la réflexion (1306) d'un rayonnement émis par au moins une antenne émettrice sur au moins un élément réflecteur en direction de l'objet, dans lequel l'antenne émettrice est conçue pour émettre un rayonnement polarisé linéairement, et/ou un rayonnement réfléchi par l'objet en direction d'au moins une antenne réceptrice, dans lequel le rayonnement émis est incident en formant un angle de 30° à 60° par rapport à un vecteur normal de la surface de l'élément réflecteur et dans lequel une part de rayonnement réfléchie par l'élément réflecteur est transférée dans un état de polarisation elliptique ou circulaire par une couche de matériau polarisante sur l'élément réflecteur,

la réception (1308) d'un rayonnement réfléchi par l'objet et présentant un deuxième état de polarisation, qui est un état de polarisation linéaire, dans lequel une part du rayonnement reçu dans l'antenne réceptrice correspond au sens de vibration du deuxième état de polarisation (522, 722, 922) de l'antenne réceptrice ; et

la détermination (1310) de l'imagerie de l'objet sur la base du rayonnement reçu par l'antenne réceptrice.

Fig. 1A

Fig. 1B

Fig. 2

Fig. 3A

Fig. 3D

Fig. 3B

Fig. 3C

EP 2 840 412 B1

406

404

402

420

Fig. 4B

408

412

414

p

s

422

410

Fig. 4A

Fig. 4C

p

s

424

426

p

s

428

428

p

s

428

422

p

s

Fig. 4D

Fig. 4E

Fig. 4F

Fig. 4G

EP 2 840 412 B1

Fig. 5A

Fig. 5B

Fig. 5C

Fig. 5D

Fig. 5E

Fig. 5F

Fig. 5G

EP 2 840 412 B1

Fig. 6A

Fig. 6B

Fig. 6C

Fig. 6D

Fig. 6E

Fig. 6F

Fig. 6G

EP 2 840 412 B1

Fig. 7B

Fig. 7C

Fig. 7A

Fig. 7D

Fig. 7E

Fig. 7F

Fig. 7G

Fig. 8B

Fig. 8C

Fig. 8A

Fig. 8D

Fig. 8E

Fig. 8F

Fig. 8G

Fig. 8H

27

Fig. 9A

Fig. 9B

Fig. 9C

Fig. 9D

Fig. 9E

Fig. 9F

Fig. 9G

Fig. 9H

Fig. 10

Fig. 11

Fig. 12A

max{$\Delta \Phi(\alpha,d)$} @ f=75 GHz

Fig. 12B

1300

Abbildung eines Objekts

1302

1304

Aussenden elektromagnetischer Strahlung

1306

Reflektion von der Sendeantenne ausgesendeter Strahlung in Richtung auf das Objekt und/oder vom Objekt reflektierter Strahlung durch ein Reflektorelement mit polarisations-wirksamer Materialschicht

1308

Empfangen vom Objekt reflektierter Strahlung

1310

Bestimmen der Abbildung des Objekts

1312

Bereitstellen der Abbildung

Fig. 13

**EP 2 840 412 B1**

**IN DER BESCHREIBUNG AUFGEFÜHRTE DOKUMENTE**

**In der Beschreibung aufgeführte Patentdokumente**

- DE 102011078539 A1
- US 2010117885 A1
- EP 1506447 A0
- WO 0398323 A1
- US 5680139 A
- DE 60318075 T2
- EP 1543585 B1
- US 2736895 A